# EUROPEAN PATENT APPLICATION

(11) **EP 4 075 399 A1**
(43) Date of publication of application: **19.10.2022**
(21) Application number: 20900801.0
(22) Date of filing: 21.12.2020
(51) Int. Cl.: G07G 1/00

(54) **INFORMATION PROCESSING SYSTEM**

(30) Priority: 19.12.2019 JP 2019229737
(71) Applicant: Touch to Go Co., Ltd., Tokyo, 108-0074 (JP)
(72) Inventor: AKUTSU Tomoki, Tokyo 108-0074 (JP); NAMIKAWA Toshiya, Tokyo 108-0074 (JP); KAWABATA Hideki, Tokyo 108-0074 (JP)
(74) Representative: Müller-Boré & Partner Patentanwälte PartG mbB
(86) International application number: PCT/JP2020/047765
(87) International publication number: WO 2021/125357

(57) **Abstract**

The objective of the present invention is to automate settlement of the price of a product, when a purchaser purchases a product displayed in a shop, in order to reduce the time required for settlement of the price of the product, and to prevent fraud by the purchaser or the cashier. The present information processing system is provided with a moving object tracking means, a shelf product recognition means, and a settlement means. The moving object tracking means finds a moving object such as a shopper or a basket moving within a store, defines the region of the moving object, and captures images of the moving object while tracking the movement thereof. The shelf product recognition means constantly monitors the state within a shelf, and compares captured images before and after an object is removed from the shelf, a change in weight, or a change in a position signal. The product to be recognized is defined from the captured images, the weight, and position information, and the product is identified from the defined information. The settlement means settles payment for the identified product.

## Description

### TECHNICAL FIELD

The present invention relates to an information processing system.

### BACKGROUND ART

From the past, in shops such as convenience stores, supermarkets, shopping centers, and various types of mass merchandise outlets, purchasers pick up products from product shelves, put them in shopping carts or shopping baskets, carry them to a cash register installed near an exit of a shop, and check out the products through a self-cash register (for example, see Patent Document 1).

Patent Document 1: Japanese Unexamined Patent Application, Publication No. 2001-76261

### DISCLOSURE OF THE INVENTION

### Problems to be Solved by the Invention

However, in a case in which the products in the shopping cart or the shopping basket are checked out through the cash register, since it is necessary to scan bar codes of the products even in the case of the self-cash register, a cash register waiting line has been unable to be solved, and the purchasers wait in front of the cash register for a long time. Further, when purchasers purchase products in shops, in a case in which there are many purchasers, there are cases in which the purchasers give up shopping. Therefore, when the above circumstances are considered, there is a demand for a system which is capable of implementing automation of checkout for products and reducing a time taken for checkout for products when purchasers purchase products displayed in shops. Furthermore, in conventional shops, misbehaviors such as shoplifting by shoppers or cash register personnel also become a problem, and there is a demand for a system which is capable of preventing such misbehaviors.

The present invention was made in view of such circumstances, and it is an object of the present invention to make it possible to achieve automation of checkout for products, reduction of a time taken for checkout for products, and fraud prevention by purchasers and cashiers when the purchasers purchase products displayed in shops.

### Means for Solving the Problems

In order to achieve the above object, an information processing system according to one aspect of the present invention is: an information processing system used when a person moves and purchases a product, including: a moving object tracking means for tracking a moving object including the person or an object that moves together with the person; a product specifying means for specifying a product by a predetermined method using at least one of a weight sensor and a camera; and an associating means for associating the specified product with the moving object having a predetermined position relation.

### Effects of the Invention

According to the present invention, it is possible to achieve automation of checkout for products, reduction of a time taken for checkout for products, and fraud prevention by purchasers and cashiers when the purchasers purchase products displayed in shops.

### BRIEF DESCRIPTION OF THE DRAWINGS

FIG. 1 is a diagram showing main points of an information processing system according to an embodiment of the present invention;
FIG. 2 is a schematic diagram showing an outline of a flow of a hybrid check system of the information processing system of FIG. 1;
FIG. 3 is a diagram showing a layout example of a supermarket employing information processing system of FIG. 1;
FIG. 4 is a configuration diagram showing a configuration of the information processing system shown in FIG. 1 according to a first embodiment;
FIG. 5 is a block diagram showing a hardware configuration of a server in the configuration of the information processing system according to the first embodiment of the present invention;
FIG. 6 is a block diagram showing a hardware configuration of a sales room device in the configuration of the information processing system according to the first embodiment of the present invention;
FIG. 7 is a block diagram showing a hardware configuration of a checkout gate in the configuration of the information processing system according to the first embodiment of the present invention;
FIG. 8 is a functional block diagram showing an example of a functional configuration of a server of FIG. 5, a sales room device of FIG. 6, and a checkout gate and a visual inspection terminal of FIG. 7 in the configuration of the information processing system according to the first embodiment of the present invention;
FIG. 9 is a functional block diagram showing an example of a detailed functional configuration of a moving object tracking unit provided in the sales room device of FIG. 6 in the configuration of the information processing system according to the first embodiment of the present invention;
FIG. 10 is a functional block diagram showing an example of a detailed functional configuration of a position information management unit provided in the sales room device of FIG. 6 in the configuration of the information processing system according to the first embodiment of the present invention;
FIG. 11 is a functional block diagram showing an example of a detailed functional configuration of a shelf product recognition unit provided in the sales room device of FIG. 6 in the configuration of the information processing system according to the first embodiment of the present invention;
FIG. 12 is a flowchart for describing an automatic checkout process executed by a server, a sales room device, a checkout gate, and a visual inspection terminal of FIG. 8 in the configuration of the information processing system according to the first embodiment of the present invention;
FIG. 13 is another flowchart for describing the automatic checkout process executed by the server, the sales room device, the checkout gate, and the visual inspection terminal of FIG. 8 in the configuration of the information processing system according to the first embodiment of the present invention;
FIG. 14 is a diagram showing a layout example of a supermarket employing information processing system of FIG. 1 and is a diagram showing an example different from that of FIG. 3;
FIG. 15 is a block diagram showing a hardware configuration of a sales room device in a configuration of an information processing system according to a second embodiment of the present invention;
FIG. 16 is a functional block diagram showing an example of a functional configuration of the server of FIG. 5, the sales room device of FIG. 6, and the checkout gate and the visual inspection terminal of FIG. 7 in the configuration of the information processing system according to the second embodiment of the present invention;
FIG. 17 is a functional block diagram showing an example of a detailed functional configuration of a shelf product recognition unit provided in a sales room device of FIG. 16 in the configuration of the information processing system according to the second embodiment of the present invention;
FIG. 18 is a flowchart for describing an automatic checkout process executed by a server, a sales room device, a checkout gate, and a visual inspection terminal of FIG. 15 in the configuration of the information processing system according to the second embodiment of the present invention; and
FIG. 19 is another flowchart for describing an automatic checkout process executed by the server, the sales room device, the checkout gate, and the visual inspection terminal of FIG. 15 in the configuration of the information processing system according to the second embodiment of the present invention.

### PREFERRED MODE FOR CARRYING OUT THE INVENTION

### [First Embodiment]

An overview of an information processing system according to a first embodiment of the present invention will be described below. The information processing system according to the first embodiment of the present invention is applied as a system that performs automatic checkout for products.

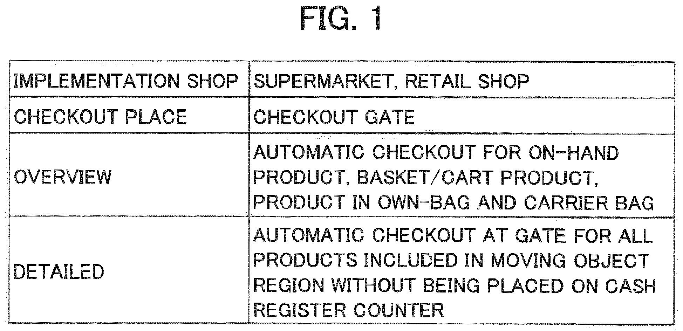

FIG. 1 is a table showing a list of main points of the information processing system according to the first embodiment of the present invention. In an "implementation shop" field in FIG. 1, implementation shops of the first embodiment are described. Here, the implementation shops are merely examples, and respective application places of the embodiment of the present invention are not particularly limited. In a "checkout place" field in FIG. 1, a place in which shoppers makes checkout is described in the embodiment of the present invention. The checkout place in the embodiment of the present invention exemplifies a checkout gate. The checkout gate has a function of checking out a product when an object already specified as a product is not placed on a cash register counter. In an "overview" field in FIG. 1, overviews of the embodiment of the present invention are described. In a "details" field in FIG. 1, details of the embodiment of the present invention are described.

Here, a product which is sold in a shop but not specified as a product yet is referred to as an "object". Further, a thing which is not a product, for example, personal possessions carried by a shopper are also referred to as an "object". Then, an "object" specified as a product is referred to as a "product". Therefore, the "product" means what is sold in a shop front. Further, the information processing system according to the embodiment of the present invention includes one or more sensing devices for measuring an object. The sensing device may include various devices, for example, a weight sensor, a 3D sensor (a TOF sensor, a stereo camera, a LIDAR sensor, or the like), a temperature sensor, a distance sensor, and a sensor utilizing infrared rays in addition to an image sensor (for example, a camera).

An image captured by the image sensor such as the camera is hereinafter referred to as a "captured image". Further, a captured image including an object as a subject is hereinafter referred to as a "captured object image". On the other hand, a captured image including a product as a subject is hereinafter referred to as a "captured product image". In this description, when the captured product image and the captured object image are subjected to various kinds of image processing, the captured product image and the captured object image are actually handled in the form of data, but for convenience of description, the data is not described. Here, as the captured object image and the captured product image, for example, an image obtained by individually cutting out a product, a logo image of a product, a barcode image of a product, a label image of a product, a captured image of the entire shelf of a product, and an image of the inside of the shop captured from a ceiling or the like can be used.

In the information processing system according to the embodiment of the present invention, when the product is checked out, a visual inspector may specify the product or determine selling restriction of the product with respect to an object cannot be specified as a product or a product whose sale is restricted. Specifically, for example, information on the object or the product is transmitted to a visual inspection terminal. Then, the visual inspector specifies the product or determines the selling restriction (determines whether to release the selling restriction), and the determination result is transmitted from the visual inspection terminal. At this time, for the release of the selling restriction on the selling-restricted product, a clerk may respond on the spot in response to the result of the determination or employ the result of the visual inspection as a system. Further, it is assumed that the product may be specified and the checkout may be performed by appropriately referring the visual inspection result by the visual inspector.

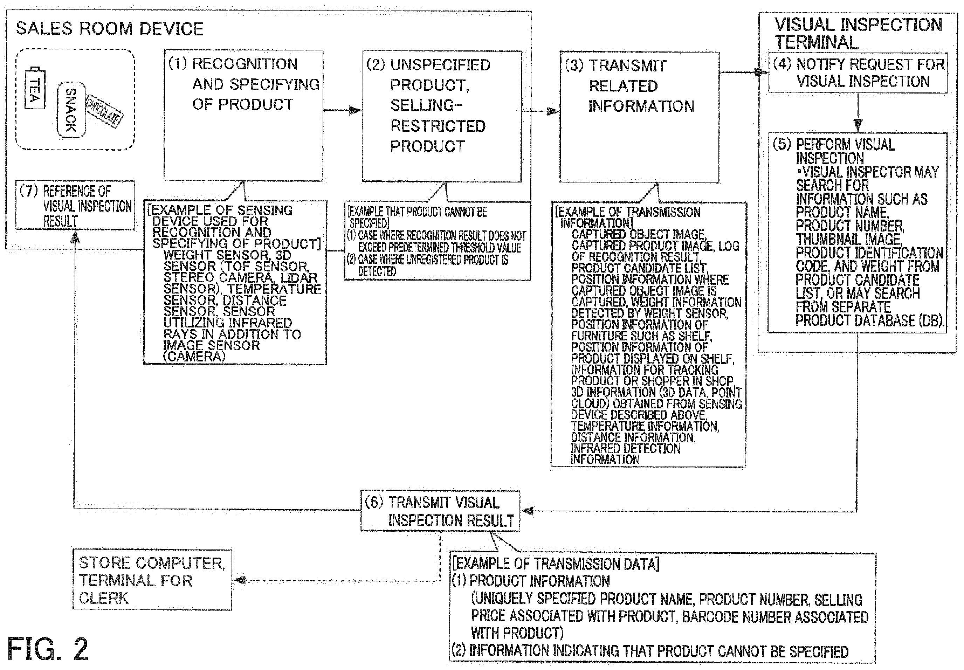

FIG. 2 is a schematic diagram showing an outline of a flow of a hybrid check system (visual inspection) of the information processing system shown in FIG. 1. As shown in FIG. 2, when (1) the product is recognized and the product is specified in the shop (in the sales room) and (2) it is determined that an object cannot be specified as the product or the product is a selling-restricted product, (3) related information regarding such an object or product is transmitted to the visual inspection terminal. Here, an example of the related information regarding the object or the product includes information obtained by various sensing devices. Specific examples of the related information include a captured object image, a captured product image, a log of recognition results, a product candidate list, position information on which the captured object image is captured, weight information detected by the weight sensor, position information of furniture such as shelves, position information of products displayed in the shelf, information used to track products or shoppers in the shop, 3D information (3D data, point cloud) obtained from the above-described sensing device, temperature information, distance information, and detection information using infrared rays. Here, when the captured object image is used as the related information, captured object images of a plurality of frames may be transmitted to the visual inspection terminal. Then, (4) the request for visual inspection (reception of related information regarding the visual inspection target) is notified to the visual inspection terminal, and (5) the visual inspector executes the visual inspection. Thus, an object, which cannot be specified as a product in the shop, can be uniquely specified as a product, or the selling restriction of the selling-restricted product can be released. Further, (6) the visual inspection result (specifying result of the product or determination result of the selling restriction) by the visual inspector is transmitted to the sales room device installed in the sales room, and (7) the visual inspection result is referred to in the sales room device. At this time, it is also possible to notify the sales room device that the product is a selling-restricted product. When the result that the product is unspecified is returned even after the visual inspection or when the information is insufficient that contributes to the release determination of the selling restriction of the selling-restricted product, the purchaser is notified by the screen display on the sales room device, or may be guided by voice. Specific cases to be considered include (A) a case where the purchaser is requested to take the product back (retake it from the shelf and put it back in the basket) when the product is not specified, (B) a case where retaking of the image is requested when the captured image of the purchaser's face or ID card used to determine the release of the selling restriction is unclear, and (C) a case where a method of using the sales room device is guided to the purchaser. Further, it is assumed that other cases to be considered include (D) a case where of presenting the purchaser with product candidates with a high possibility of being applicable and requesting to select the applicable product on the screen when the product is unspecified. Furthermore, (E) a case of requesting the purchaser to read the information for specifying the product with a barcode reader when the product is unspecified. For voice guidance, a pre-recorded voice may be played. Further, the purchaser and the visual inspector may have a call via a microphone and a speaker provided in the sales room device. Specifically, the embodiment of the information processing system to be executed by such a flow can be realized as the following information processing system.

The information processing system according to the embodiment of the present invention is applied to a retail shop such as a supermarket. Specifically, the information processing system recognizes tracks, as moving objects Mo, shoppers and baskets including not only a shopping basket and a cart placed in a supermarket but also an own-bag and a carrier bag of the shopper. Then, the information processing system recognizes and specifies a product when the object is taken from a shelf, and associates the specified product with the moving object such that the product can be automatically checked out at a cash register gate even when the product is not placed on a cash register terminal. At this time, according to the set conditions, the object taken from the shelf may be confirmed by a visual inspector in a sensing device such as a camera installed in the sales room and a visual inspection terminal connected via a network. Then, the information processing system according to the embodiment of the present invention may specify the product by further referring to such a confirmation result (visual inspection result).

The embodiment of the present invention will be described below with reference to the respective drawings. Here, for convenience of description, the moving object Mo will be described below as a shopper. Further, a passage 44 including checkout gates 5-1 to 5-3 is defined as a checkout area 45.

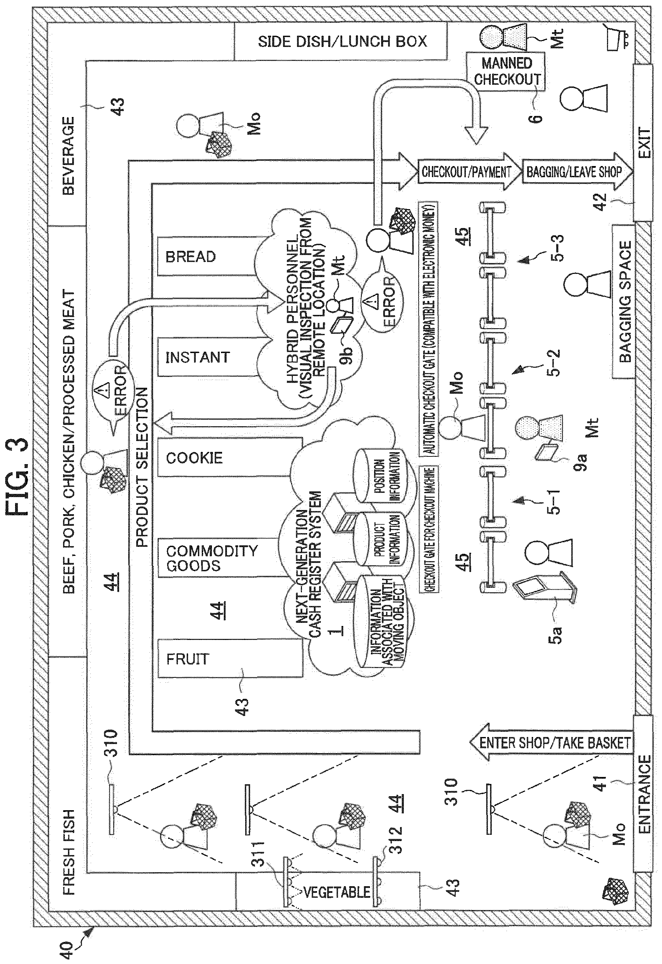

FIG. 3 is a diagram showing a layout example of a supermarket employing the information processing system shown in FIG. 1. The information processing system according to the embodiment of the present invention is applied to a shop 40 such as the supermarket as shown in FIG. 3. The information processing system according to the embodiment of the present invention is configured to be able to perform the automatic checkout even when the product passes through checkout gates 5-1 to 5-3 without being placed on the cash register counter.

In the shop 40, for example, shopping baskets and shopping carts (without numbering) are placed at an entrance 41. The checkout gates 5-1 to 5-3 and a checkout cash register 6 manipulated by a clerk Mt are installed in front of an exit 42. Further, a plurality of shelf racks 43 are installed between the entrance 41 and the exit 42 to display products for sale. In the shelf rack 43, a plurality of shelves are arranged with predetermined intervals in a vertical direction, and various products are arranged on each of the plurality of shelves. Hereinafter, "a space between shelves" is also referred to as "in-shelf". A space between the shelf rack 43 and the shelf rack 43 facing each other in a horizontal direction is defined as a passage 44.

The moving object Mo enters the shop from the entrance 41, and goes along the passage 44 by picking up a shopping basket, pushing a shopping cart, or carrying own-bag. The moving object Mo picks up the product in the shelf, and goes along the passage 44. When the moving object Mo picks up all the products desired to be purchased, the moving object Mo goes to a checkout area 45 and makes a checkout. The clerk Mt is looking around in the passage 44 and the checkout area 45. The clerk Mt carries an information terminal 9a. The information terminal 9a is a portable information processing terminal such as a smartphone and has a function of displaying a state in the shop, a function of displaying an error state occurring in the shop, and a remote control function.

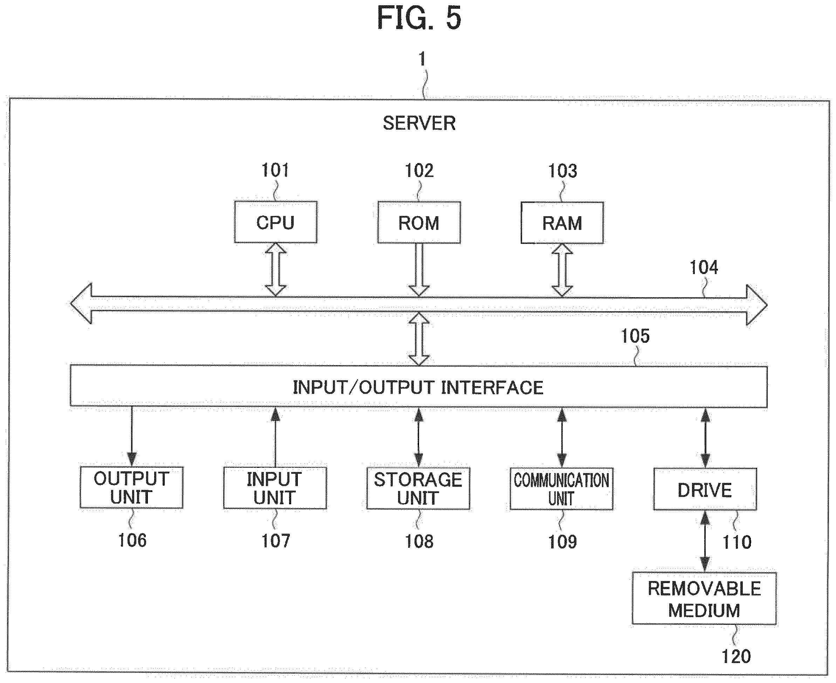

In FIG. 3, a form of the outside of the shop 40 or the backroom of the shop 40 other than the inside of the shop 40 is illustrated in a line drawing drawn in a cloud shape. The server 1 (FIG. 5) is installed outside the shop 40 or in the backroom of the shop. Outside the shop or in the backroom, the clerk Mt can monitor the inside of the shop 40 through a screen of a large monitor (not shown) or a screen of the information terminal 9b.

As an example of the sensing device, a plurality of ceiling cameras 310 are installed on the ceiling of the passage 44 between the entrance 41 and the exit 42. A shelf camera 311 is installed at each of a plurality of positions of each shelf in each shelf rack 43 as another example of the sensing device. The shelf camera 311 captures the inside of the shelf, the product in the shelf, and other predetermined regions. Further, the shelf camera 311 captures the hand, the object in the shelf, and the like as the captured object image when the hand of the moving object Mo enters a predetermined region in the shelf or when the object is picked up from the shelf. Further, as the camera used in the present embodiment, a camera capable of acquiring a 3D image or a 2D image, or a camera such as a fisheye camera capable of capturing a wide angle may be employed. Further, a weight sensor 312 is installed at each of a plurality of positions of each shelf in each shelf rack 43 as another example of the sensing device. The weight sensor 312 detects a weight of the shelf on which the product can be placed. Therefore, the entry and delivery of the product from the shelf is detected from the difference in the change in weight detected by the weight sensor 312. Here, the cameras and the weight sensor as the sensing devices installed on the ceiling and each of the shelf racks are merely examples, and the present invention is not limited thereto. For example, various types of sensing devices including a 3D sensor, a temperature sensor, a distance sensor, and a sensor utilizing infrared rays can be installed. Further, a plurality of sensing devices such as the weight sensor may be installed on one shelf on which the product can be placed.

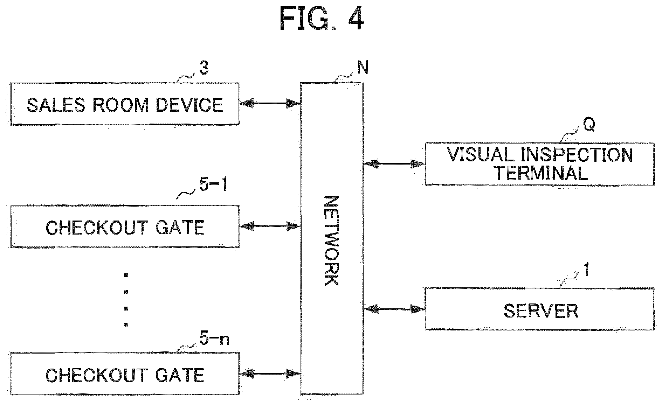

FIG. 4 is a configuration diagram showing a configuration of the information processing system shown in FIG. 1. The information processing system according to the embodiment of the present invention has a configuration as shown in FIG. 4. The information processing system includes a server 1, a sales room device 3, n (n is an arbitrary integer) checkout gates 5-1 to 5-n, and a visual inspection terminal Q. The server 1, the sales room device 3, the checkout gates 5-1 to 5-n, and the visual inspection terminal Q are connected to one another via a network N such as an Internet line. For convenience of the description, only one server 1 is shown in FIG. 4, but in practice, there may be a plurality of servers 1. Hereinafter, when there is not necessary to distinguish the checkout gates 5-1 to 5-n individually, these checkout gates are referred to collectively as a "checkout gate 5".

The server 1 executes each process to manage each operation of the sales room device 3, the checkout gate 5, and the visual inspection terminal Q. FIG. 5 is a block diagram showing a hardware configuration of the server in the configuration of the information processing system according to the first embodiment of the present invention. The server 1 includes a CPU (Central Processing Unit) 101, a ROM (Read Only Memory) 102, a RAM (Random Access Memory) 103, a bus 104, an input/output interface 105, an output unit 106, an input unit 107, a storage unit 108, a communication unit 109, and a drive 110.

The CPU 101 executes various kinds of processes in accordance with a program stored in the ROM 102 or a program loaded from the storage unit 108 into the RAM 103. The RAM 103 stores data necessary for the CPU 101 to execute various kinds of processes as appropriate.

The CPU 101, the ROM 102, and the RAM 103 are connected to one another via the bus 104. The input/output interface 105 is also connected to the bus 104. The output unit 106, the input unit 107, the storage unit 108, the communication unit 109, and the drive 110 are connected to the input/output interface 105.

The output unit 106 includes, for example, a display and a speaker, and outputs various kinds of information as an image and a voice. The input unit 107 includes, for example, a keyboard and a mouse, and inputs various kinds of information.

The storage unit 108 is configured by, for example, a hard disk and a DRAM (dynamic random access memory), and stores various kinds of data. As illustrated in FIG. 4, the communication unit 109 communicates with the sales room device 3 and the checkout gate 5 via the network N including the Internet line.

A removable medium 120 constituted by a magnetic disk, an optical disk, a magneto-optical disk, or a semiconductor memory is appropriately mounted on the drive 110. A program read from the removable medium 120 by the drive 110 is installed in the storage unit 108 as necessary. The removable medium 120 can also store various kinds of data stored in the storage unit 108, similarly to the storage unit 108.

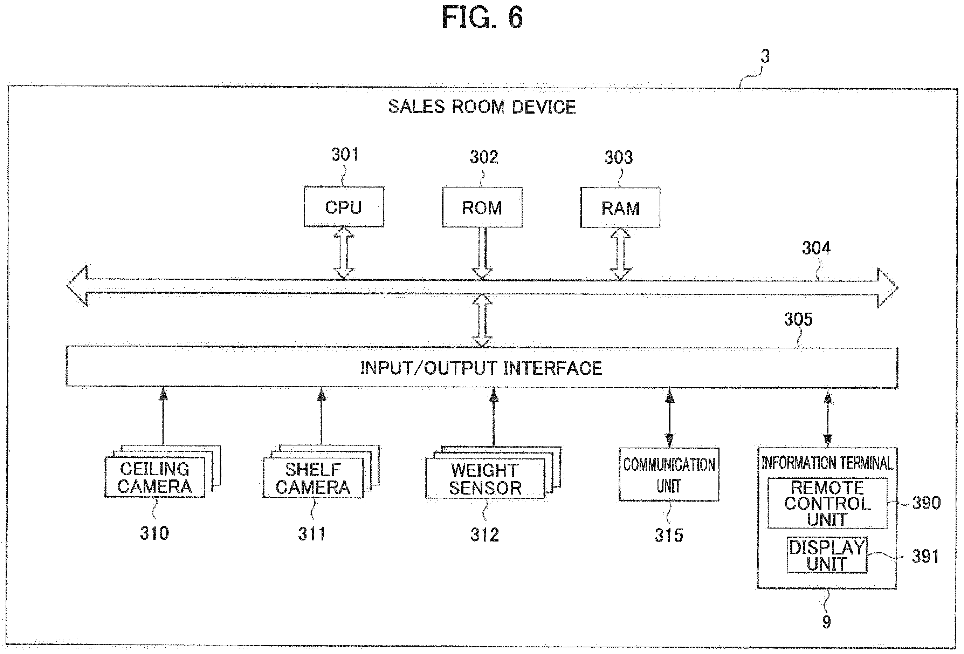

FIG. 6 is a block diagram showing a hardware configuration of the sales room device in the configuration of the information processing system according to the first embodiment of the present invention.

Therefore, the sales room device 3 includes a CPU 301, a ROM 302, a RAM 303, a bus 304, an input/output interface 305, a ceiling camera 310, a shelf camera 311, a weight sensor 312, an information terminal 9, and a communication unit 315.

The CPU 301, the ROM 302, the RAM 303, the bus 304, the input/output interface 305, and the communication unit 315 of the sales room device 3 are configured similarly to those of the server 1 illustrated in FIG. 5.

The ceiling camera 310, the shelf camera 311, and the weight sensor 312 are connected to the network. For example, the ceiling camera 310, the shelf camera 311, and the weight sensor 312 may be connected to the network by a PoE connection (Power over Ethernet) or a USB (Universal Serial Bus) cable.

The information terminal 9 is an information device such as a smartphone or a tablet including a remote control unit 390 and a display unit 391. The remote control unit 390 has a function of eliminating an error state or the like such as a system processing abnormality through remote control. The display unit 391 includes a screen on which the error state and the moving object Mo are displayed. Further, the information terminal 9 includes a voice generation unit (not shown) that notifies the error state.

Here, the error state in the embodiment of the present invention occurs in various situations. Examples of various situations include a case where an abnormality occurs in system processing, a case where the product is unable to be specified in shelf product recognition, a case where the moving object Mo associated with the unspecified object or the selling-restricted product tries to pass through the gate 5, and a case where the moving object Mo, who has not checked out, tries to leave the shop.

The checkout gate 5 is connected to the sales room device 3 via the network N. The checkout gates 5 are divided into the checkout gate 5-1 including a checkout machine 5a, the checkout gate 5-2 using electronic money and the like, and the checkout gate 5-3 that can perform the checkout through only passing. The checkout gates 5-1 to 5-3 other than the manned checkout cash register 6 may include a normally closed opening/closing member (without numbering).

At the checkout gate 5-1 including the checkout machine 5a, a total amount of money of the purchased products is calculated. Then, a person who makes payment can check out through the checkout machine 5a installed closer to the exit 42. The checkout machine 5a is installed closer to the exit 42 compared to the checkout gate 5-1. The checkout machine 5a includes a payment means in which payment can be made using cash, a credit card, electronic money, point payment, a gift card, virtual currency, a prepaid card, identification information such as a barcode or a QR code (registered trademark), an employee ID card, and application information.

The checkout gate 5-2 using the electronic money and the like can perform a checkout by reading information of the electronic money when a person who makes the payment touches various cards to a card reading unit (not shown) provided in a gate body. The electronic money includes not only cards in narrow sense such as credit cards, so-called point cards, and prepaid cards but also portable information terminals, which can display a barcode or a QR code (registered trademark), in addition to payable IC cards, but will be described as various cards for convenience. In other words, when a person who makes a payment enters the checkout area 45 of the checkout gate 5-2, and touches various cards to the card reading unit, product information associated with the moving object Mo to be described below is read out, and the checkout and the payment are completed. Then, the person who makes the payment can pass through the checkout gate 5-2.

At the checkout gate 5-3, the checkout and the payment are completed only when the moving object Mo of which personal information is acquired in the entrance 41 or the passage 44 passes through the checkout gate 5-3. In other words, the person who makes the payment can complete the checkout and the payment without paying cash or reading of a card. In the manned checkout cash register 6, the clerk Mt individually inputs prices of products and performs a checkout.

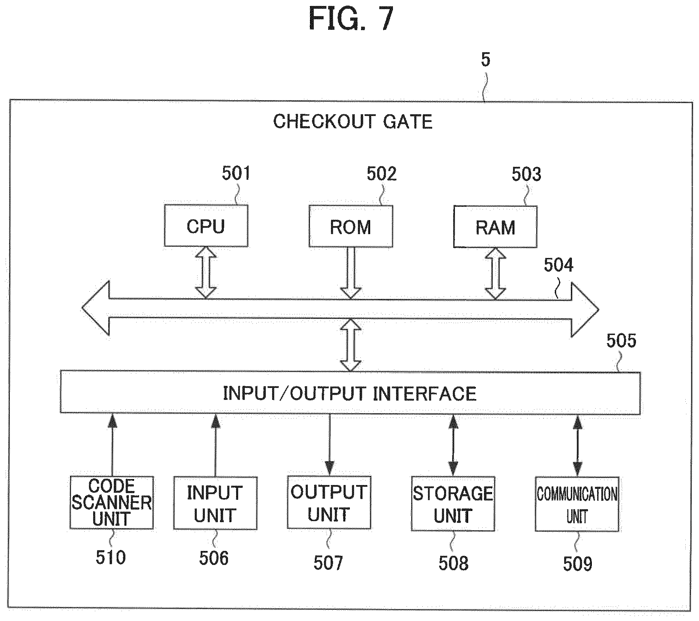

FIG. 7 is a block diagram showing a hardware configuration of the checkout gate in the configuration of the information processing system according to the first embodiment of the present invention. The checkout gate 5 includes a CPU 501, a ROM 502, a RAM 503, a bus 504, an input/output interface 505, an input unit 506, an output unit 507, a storage unit 508, and a communication unit 509.

The CPU 501, the ROM 502, the RAM 503, the bus 504, the input/output interface 505, the storage unit 508, and the communication unit 509 of the checkout gate 5 are configured similarly to those of the server 1 shown in FIG. 5.

The input unit 506 is a checkout button provided in the gate body in the checkout gate 5-1, for example. Further, the input unit 506 is an information reading unit that detects various cards or information such as various kinds of identification information in the checkout gate 5-2 using the electronic money or the checkout gate 5-3 that can perform the checkout only by passing therethrough.

The output unit 507 outputs a signal for opening/closing the opening/closing member (not shown) provided in each of the checkout gates 5-1 to 5-3. Further, the checkout gate 5-1 including the checkout machine 5a outputs a checkout amount of money and a product name to the checkout machine 5a.

A code scanner unit 510 is provided in the checkout gates 5-1 to 5-3. When the object (unspecified object) in which any product is unable to be specified is associated with the moving object Mo, the moving object Mo can read the identification information of the product using a barcode reader (not shown), and specify the product.

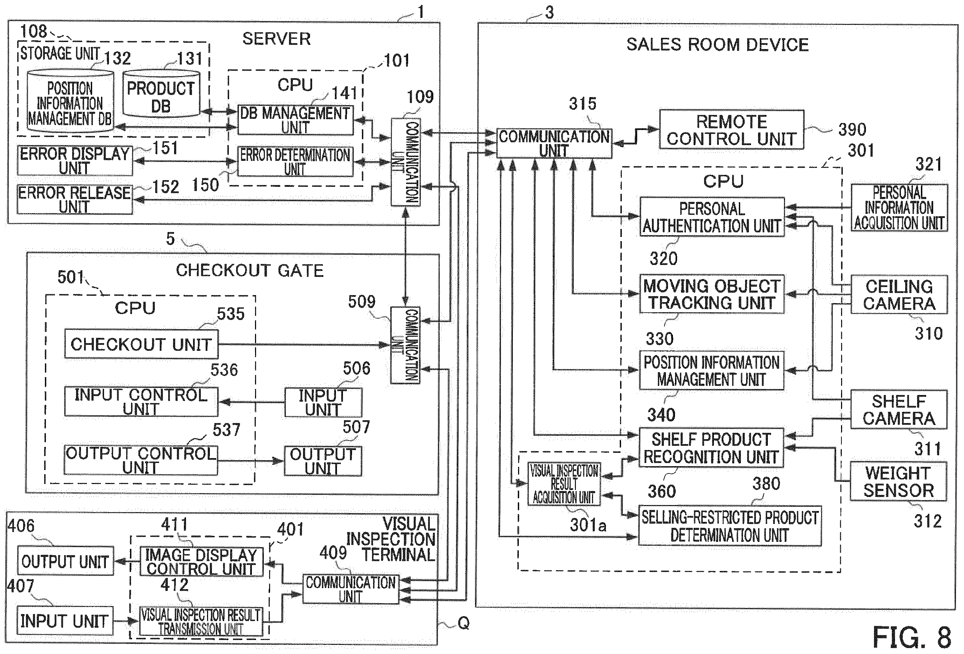

FIG. 8 is a functional block diagram showing an example of functional configurations of the server shown in FIG. 5, the sales room device shown in FIG. 6, and the checkout gate and the visual inspection terminal shown in FIG. 7 in the configuration of the information processing system according to the first embodiment of the present invention.

The server 1 includes a CPU 101, a storage unit 108, an error display unit 151, and an error release unit 152. In the CPU 101 of the server 1, a DB management unit 141 functions to manage the personal information and the product information. The DB management unit 141 may be configured to be provided in each of the checkout gates. The CPU 101 of the server 1 includes an error determination unit 150. A product DB 131 and a position information management DB 132 are installed in one region of the storage unit 108 of the server 1. The product DB 131 is a database (DB) that stores information related to the product. The position information management DB 132 manages the position of the moving object Mo.

In the CPU 401 of the visual inspection terminal Q, an image display control unit 411 and a visual inspection result transmission unit 412 function.

In the visual inspection terminal Q, when visual inspection is requested by the sales room device 3 or the checkout gate 5, the image display control unit 411 outputs related information on the object or the product transmitted from the sales room device or the checkout gate 5 to the output unit 406. The visual inspection result transmission unit 412 transmits the visual inspection result (specifying result of the product or determination result of the selling-restricted product) input through the input unit 407 by the visual inspector with respect to the related information on the object or the product output to the output unit 406, to the sales room device 3 or the checkout gate 5 by which the visual inspection is requested.

In the CPU 301 of the sales room device 3, a personal authentication unit 320, a moving object tracking unit 330, a position information management unit 340, a shelf product recognition unit 360, a selling-restricted product determination unit 380, and a visual inspection result acquisition unit 301a function.

The personal authentication unit 320 performs personal authentication who the moving object Mo registered in the DB management unit 141 of the server 1 is from the personal information of the moving object Mo acquired by the personal information acquisition unit 321. The personal authentication unit 320 and the personal information acquisition unit 321 may be provided in the entrance 41. The personal information acquisition unit 321 employs, for example, a reading device which is touched by a portable information terminal such as an IC card of the moving object Mo, a smart phone, or a tablet, and a reading device that reads bio-information such as a fingerprint, a vein, or an iris.

Here, the personal information includes, for example, bio-information such as a fingerprint, a vein, or an iris and information related to privacy such as financial-related information such as a credit card number or a bank account number in addition to information identifying an individual such as a name, a sex, a date of birth, an address, a phone number, and the like, and the personal information also includes the purchase history of the moving object Mo. In a case in which personal authentication unit 320 cannot be performed the personal authentication at the time of the entry of the shop, the personal authentication may be performed based on the image of the moving object Mo obtained by the camera during shopping. The acquired personal information is also used for selling restriction (including a release) and purchase analysis.

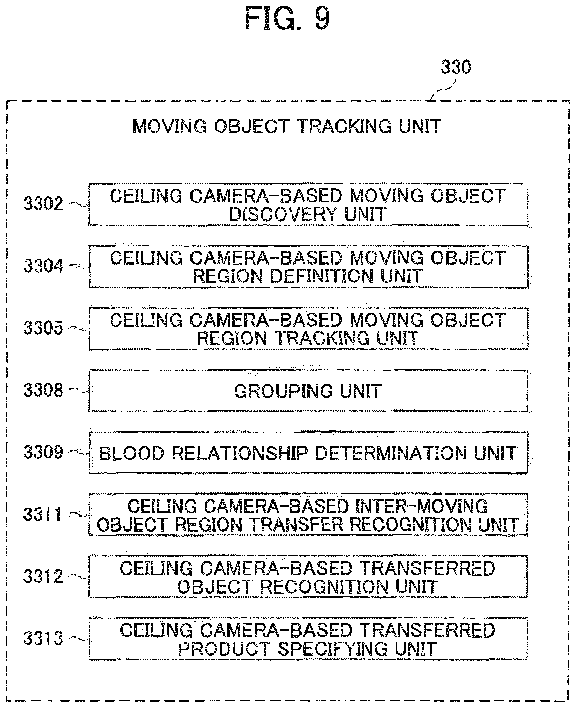

FIG. 9 is a functional block diagram showing a detailed functional configuration example of the moving object tracking unit provided in the sales room device shown in of FIG. 6 in the configuration of the information processing system according to the first embodiment of the present invention.

When the ceiling camera 310 is used as the sensing device, as shown in FIG. 9, the moving object tracking unit 330 includes a ceiling camera-based moving object discovery unit 3302, a ceiling camera-based moving object region definition unit 3304, a ceiling camera-based moving object region tracking unit 3305, a grouping unit 3308, a blood relationship determination unit 3309, a ceiling camera-based inter-moving object region transfer recognition unit 3311, a ceiling camera-based transferred object recognition unit 3312, and a ceiling camera-based transferred product specifying unit 3313 function. The ceiling camera-based moving object discovery unit 3302 discovers the moving object Mo using a state space model (for example, Bayesian filter) on the basis of the captured image captured by the ceiling camera 310. The ceiling camera-based moving object region definition unit 3304 defines the region of the moving object Mo discovered by the ceiling camera-based moving object discovery unit 3302 as a moving object region. The ceiling camera-based moving object region definition unit 3304 continuously finds a changed region centering on the moving object Mo and defines the moving object region. In other words, the ceiling camera-based moving object region definition unit 3304 defines the moving object region within a certain range of the discovered moving object Mo, the moving object Mo, and the region around the moving object Mo as the moving object region.

Here, when a region centered on a person is referred to as a person region, the person region becomes a subordinate concept of the moving object region. Further, when a region centered on the baskets is referred to as a basket region, the basket region becomes a subordinate concept of the moving object region. Further, when a region centered on the cart is referred to as a cart region, the cart region becomes a subordinate concept of the moving object region.

When the moving object Mo is a person, an appropriate pose is estimated from a skeleton model when the person is viewed from above and compared with the person region in the actually obtained image, and thus the person, who is the moving object Mo, may be clearly defined. Alternatively, the person region can also be recognized with high accuracy by estimation of respective parts of the head, shoulders, arms, hands, and feet from 3D data of the person. Further, deep learning may be used to estimate, for example, the person region, the basket region, and the cart region from the captured image and 3D data.

The ceiling camera-based moving object region tracking unit 3305 tracks the movement of the moving object Mo. For example, the ceiling camera-based moving object region tracking unit 3305 tracks the movement of the moving object Mo by collecting feature data (color or shape) of the moving object Mo. Alternatively, the ceiling camera-based moving object region tracking unit 3305 tracks the movement of the moving object Mo using a technique of tracking an object in an image such as a Bayesian filter, a fast Fourier transform, or TLD (Tracking-Learning-Detection). In any event, in the video from the ceiling camera 310, since the moving object Mo which does not face the ceiling camera 310 is captured with an angle (in an oblique direction), the position information may not be acquired accurately. Therefore, it is considered to correct the captured image by calibration on the captured image such that the moving object Mo is captured in a confronting state. However, even when such calibration is performed, the position information of the moving object Mo may not be acquired with high accuracy.

In this regard, the ceiling camera-based moving object region tracking unit 3305 may acquire the position information with high accuracy by acquiring height information of the moving object Mo using a distance sensor. As described above, the ceiling camera-based moving object region tracking unit 3305 may keep tracking the moving object Mo.

In the present embodiment, the information obtained by the ceiling camera is used for the discovery, definition, and tracking of the moving object Mo, but the present invention is not particularly limited. For example, information obtained by the various sensing devices including the 3D sensor as an example, that is, time-series data such as 3D data or image data may be used for the discovery, definition, and tracking of the moving object Mo.

The grouping unit 3308 groups a plurality of persons when a plurality of persons such as family members or friends enter the shop. In other words, the grouping unit 3308 may group a plurality of moving objects Mo using position information (for example, a sense of distance such as overlapping and sticking) between the plurality of moving objects Mo, and information such as a moving direction (vector). The grouping unit 3308 may associate the person region with the basket region or the cart region. As the grouping unit 3308 functions as described above, the product information associated with the plurality of moving objects Mo can be checked out collectively at the checkout gate 5.

The blood relationship determination unit 3309 distinguishes a parent-child relationship, a sibling relationship, or the like by using a face authentication technique. The blood relationship determination unit assists the function of the grouping unit. The blood relationship determination unit may determine a degree of similarity of faces using the face recognition technique of deep learning and estimate the blood relationship.

A description will be given below with respect to a case in which the product is transferred from the moving object Mo to the moving object Mo.

When the ceiling camera 310 is used as the sensing device, the ceiling camera-based inter-moving object region transfer recognition unit 3311 recognizes the transfer of the product from the moving object Mo to the moving object Mo, specifies the transferred/received moving objects Mo, and reads the product list associated with each of the moving objects Mo.

Then, the ceiling camera-based transferred object recognition unit 3312 defines the region of the object from the captured image at a time point at which the transfer is recognized. Further, the ceiling camera-based transferred product specifying unit specifies the product in the read product list associated with the moving object Mo which has read and performed the transfer from the image after defining the object region, associates each moving object Mo specified by the ceiling camera-based inter-moving object region transfer recognition unit 3311 with the product specified by the transfer, and updates the list of products. The ceiling camera-based inter-moving object region transfer recognition unit 3111 may analyze the motion of the moving object Mo by using an object recognition technique such as deep learning and recognize the transfer, may recognize the hand in the person region at the time of transfer, and may recognize the transfer through overlapping of the person regions (which may include the hands).

Then, the ceiling camera-based transferred object recognition unit 3312 defines the region of the object from the captured image at a time point at which the transfer is recognized.

Further, the ceiling camera-based transferred product specifying unit 3313 specifies the product in the product list associated with the read moving object Mo (the person who has performed the transfer) to which the object recognized by the ceiling camera-based transferred object recognition unit 3312, associates each moving object Mo specified by the ceiling camera-based inter-moving object region transfer recognition unit 3311 with the product specified by the ceiling camera-based transferred product specifying unit 3313, and updates the product list of each moving object Mo.

A zoomable camera may be used as the ceiling camera, and the ceiling camera-based transferred object recognition unit 3312 may zoom up a position at which the transfer is estimated to be performed and define the region of the object. Here, in the ceiling camera-based inter-moving object region transfer recognition unit 3311, the ceiling camera-based transferred object recognition unit 3312, and the ceiling camera-based transferred product specifying unit 3313, another sensing device may be used instead of the ceiling camera, and for example, a camera capable of capturing a wide range may be employed.

In general, the longer the distance to the target to be photographed, the wider the camera can photograph. In other words, when the camera is installed on the ceiling of the shop, a range that can be photographed by one camera is limited to a narrow range in the shop with a low ceiling. For this reason, it is necessary to install many cameras when the entire shop is photographed. Therefore, for example, the following measures may be taken in order to photograph as wide a range as possible with one camera. In other words, a mirror that reflects the target to be photographed is installed on the ceiling, and a lens of the camera is installed on a wall with the mirror to face the mirror on the ceiling. Then, the object or the moving object Mo as the target to be photographed is reflected on the mirror, and the object or the moving object Mo reflected on the mirror is photographed by the camera. With the above measures, it is possible to secure an apparently long distance between the camera and the target to be photographed, and thus it is possible to photograph a wider range with one camera.

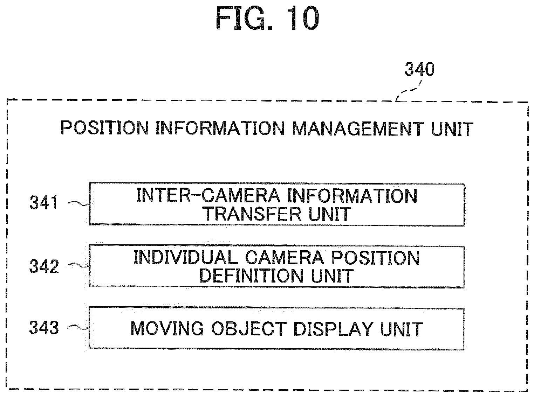

FIG. 10 is a functional block diagram showing a detailed functional configuration example of the position information management unit installed in the sales room device shown in in FIG. 6 in the configuration of the information processing system according to the first embodiment of the present invention. When the ceiling camera 310 is used as the sensing device, the position information management unit 340 functions as an inter-camera information transfer unit 341, an individual camera position definition unit 342, and a moving object display unit 343. The inter-camera information transfer unit 341 causes the image information captured by each ceiling camera 310 and the image information captured by the other ceiling camera 310 to be shared, and thus it is possible to keep tracking the moving object region even when the moving object Mo from the captured image of the ceiling camera 310 is captured by another ceiling camera 310.

The inter-camera information transfer unit 341 exchanges information with the ceiling camera 310 on the storage unit 108 including the product DB 131 through the server 1 which comprehensively controls the information captured by the ceiling camera 310. As another example, in view of the fact that the number of ceiling cameras 310 is large, the inter-camera information transfer unit 341 exchanges the image captured by each ceiling camera 310 between the ceiling cameras 310, for example, a P2P manner without going through the server 1.

The individual camera position definition unit 342 defines position information indicating positions captured by each ceiling camera 310 in the shop. In other words, the individual camera position definition unit 342 grasps a position at which the moving object captured by another ceiling camera 310 is located in the shop through the inter-camera information transfer unit 341. The individual camera position definition unit 342 synthesizes the captured images of the respective ceiling cameras 310 and creates a single shop map. Further, the individual camera position definition unit 342 replaces coordinates of each ceiling camera 310 and the shelf camera 311 with coordinates on the shop map. Further, the individual camera position definition unit 342 corrects the captured image captured by each ceiling camera 310 to the captured image confronting the floor surface in the shop in terms of calculation through perspective transformation.

The moving object display unit 343 displays the moving object Mo in the shop 30 as the position information captured by the individual camera position definition unit 342. The moving object display unit 343 may be employed as the information terminal 9 carried by the clerk Mt or the screen in the backroom of the shop. The position information of the moving object Mo thus obtained is managed by the position information management DB 132 or the memory. It should be noted that the interest or attention of the person can be inferred from the position information of the moving object Mo, that is, the information related to the behavior history of the person. For this reason, the position information of the moving object Mo managed by the position information management DB 132 or the memory can also be utilized for marketing analysis.

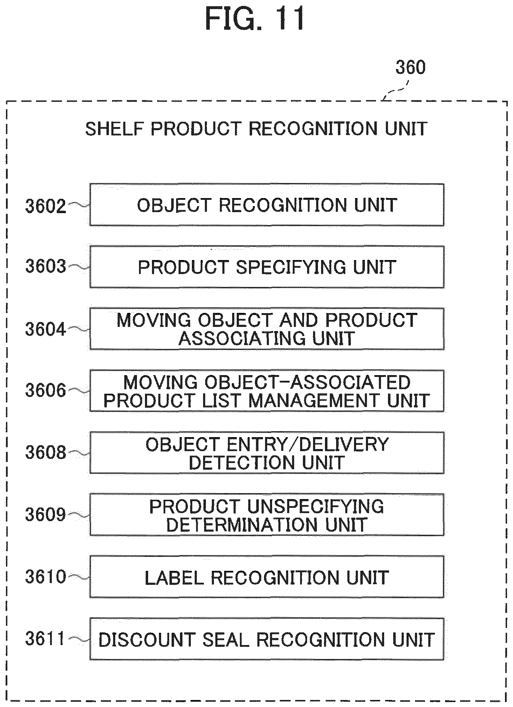

FIG. 11 is a functional block diagram showing a detailed functional configuration of the shelf product recognition unit provided in the sales room device shown in FIG. 6 in the configuration of the information processing system according to the first embodiment of the present invention. As shown in FIG. 11, the shelf product recognition unit 360 includes an object recognition unit 3602, a product specifying unit 3603, a moving object and product associating unit 3604, a moving object-associated product list management unit 3606, an object entry/delivery detection unit 3608, a product unspecifying determination unit 3609, a label recognition unit 3610, and a discount seal recognition unit 3611. When the shelf camera 311 or the weight sensor 312 is used as the sensing device, the shelf product recognition unit 360 is cooperated with another camera or a personal computer via the shelf camera 311, the weight sensor 312, and the network N.

When the shelf camera 311 is used as the sensing device, the object recognition unit 3602 compares images before and after an image in which the object is picked up from the shelf or the object is placed on (returned to) the shelf, and defines the image region serving as a product specifying target (region definition). In other words, the object recognition unit 3602 compares the captured object images before and after the change, that is, compares the captured object image before the object is picked up from the shelf or placed on the shelf with the captured object image after the object is picked up from the shelf or placed on the shelf, and specifies the changed image region. The object recognition unit 3602 checks a change in each of RGB data when the image region is specified.

On the other hand, when the weight sensor 312 is used as the sensing device, the object recognition unit 3602 confirms the change in weight, detects that the object is picked up from the shelf when the weight decreases, and detects that the object is placed (returned) on the shelf when the weight increases.

Further, when the shelf camera 311 is used, the object recognition unit 3602 may define the region of the object only from a single captured object image using a method different from the comparison of the images before and after the change, that is, the captured object image before the object is picked up from the shelf or placed on the shelf and the captured object image after the object is picked up from the shelf or placed on the shelf using the object entry/delivery detection unit 3608 as a trigger. Further, since the color data of the object is the same, the object recognition unit 3602 may define the region by using the shadow of the object such that it is not determined that there is no change even when there is a change such as entry and delivery.

Then, information related to the fact that the object thus recognized is picked up from the shelf or placed on the shelf is handed over to the product specifying unit 3603. In the above-described example, the camera or the weight sensor is used to recognize that the object is picked up from the shelf or placed on the shelf, but the present invention is not limited thereto. For example, it may be recognized that the object is picked up from the shelf or placed on the shelf based on the information acquired from various sensing devices such as a 3D sensor.

The product specifying unit 3603 specifies the product to which the object in the shelf recognized by the object recognition unit 3602 belongs.

When the shelf camera 311 is used as the sensing device, the product specifying unit 3603 lists the product candidates through an image processing technique such as specific object recognition, general object recognition, deep learning, or the like. The listed product candidates are referred to as a "product candidate list S". Thereafter, the product specifying unit 3603 specifies the product with high accuracy by exerting the verification function.

The verification function lists a "product candidate list P" by a method different from the above-described method of listing the product candidates. Results of the product candidate lists S and P are matched, and in a case in which a predetermined threshold value is exceeded, the product is specified. For example, the technique of generating the "product candidate list" may be realized by a method of matching image information of an object obtained from the object whose presence is recognized with image information held in the product DB 131 or a memory. In other words, when feature information of both images is identical (the threshold value is exceeded), the object whose presence is recognized by the object recognition unit 3602 is the product registered in the product DB 131, and the product specifying unit 3603 specifies the object as the product registered in the product DB 131. In this way, the product candidates are created through the deep learning, and then the product is specified with high accuracy by exerting the verification function.

Further, the product specifying unit 3603 may not specify the product in one frame of the captured image captured by the shelf camera 311 but may specify the product over a plurality of captured images using the captured image captured by the ceiling camera 310 as other sensing device.

On the other hand, when the weight sensor 312 is used as the sensing device, a "weight list for each product" in which the weight of each product is registered or a "position information list for each product" in which the position of the shelf on which the product is installed is prepared in advance. When the "weight list for each product" is used, the product specifying unit 3603 matches the weight change amount in the shelf with the "weight list for each product", and specifies the product or the number of products when the weight change amount exceeds a predetermined threshold value, for example. Further, the weight for each product recorded in the "weight list for each product" and the threshold value in the matching may be determined by a method such as statistical analysis or deep learning. Thus, it is possible to specify the product with high accuracy even when the weight of the product varies. On the other hand, when the "position information list for each product" is used, the product specifying unit 3603 specifies the product based on the "position information list for each product" and the information regarding the position of the shelf where the weight has changed. Furthermore, the product specifying unit 3603 may specify both the product and the number of products by using the "weight list for each product" and the "position information list for each product" for combination and matching.

In the above-described example, the product is specified using the information obtained by the camera or the weight sensor, but the present invention is not limited to such information. In other words, the product may be specified based on information acquired by other sensing devices. Further, any one method may be employed from these methods, or a plurality of methods may be employed in combination. Specifically, for example, the product may be specified by combination of the image information of the product obtained from the shelf camera 311 and the weight information and the position information of the product obtained from the weight sensor 312. At this time, the threshold value in matching may be arbitrarily set, and the threshold value may refer to, for example, information such as a purchase history, a time, a place, or a person's preference. Furthermore, an arbitrary matching algorithm may be created by combination of information acquired by deep learning using a plurality of neural networks, information acquired by other sensing devices, and thresholds values set arbitrarily for each. In this way when the plurality of methods are combined, a specific accuracy of each method is complemented, and the product can be specified with high accuracy.

Here, a case where the product is unspecified in the product specifying unit 3603 will be described. For example, when the shelf camera 311 is used as the sensing device, the product specifying unit 3603 specifies the number of similar feature points between the image in which the object is picked up from the shelf and the image in which the object is placed on the shelf. For example, the sizes of the objects captured in both the images are specified and then compared, a color difference is specified, colors are compared, and it is decided whether both the objects are similar. When the number of feature points is small, the product may be unspecified. On the other hand, when the weight sensor 312 is used as the sensing device, the product specifying unit 3603 may unspecify the product when the change in weight before and after the entry and delivery of the product deviates in threshold value from the weight of the product associated with the position information, for example. Further, when all the results obtained using any matching algorithm created by the combination of the information acquired by the above-described deep learning using the plurality of neural networks and the information obtained by the plurality of sensing devices exceed a predetermined threshold value, the product may be specified, and when such results do not exceed, the product is unspecified.

The moving object and product associating unit 3604 associates the product information of the product specified by the product specifying unit 3603 with the moving object Mo. As a premise, when the ceiling camera 310 or the shelf camera 311 is used for the discovery, definition, and tracking of the moving object Mo, if there is only one moving object Mo in a predetermined area captured by one shelf camera 311, it is possible to specify the ID of the moving object Mo and associate the moving object Mo with the product information.

As another premise, if there are a plurality of moving objects Mo in a predetermined area captured by one shelf camera 311, as a result of detecting the object entering/leaving the moving object Mo through the shelf camera or the ceiling camera-based object entry/delivery detection unit to be described below, the moving object Mo in which the object picked up from the shelf is put is specified, and the moving object Mo is associated with the product information. As still another premise, if there is no moving object Mo in a predetermined area captured by one shelf camera 311, at least one or more shelf cameras 311 detect the entry/delivery to/from the moving object Mo, specify the moving object Mo, and then associate the specified moving object Mo with the product information. Here, the discovery, definition, and tracking of the moving object Mo can also be performed using various sensing devices without limitation to the ceiling camera 310 and the shelf camera 311. As specific example, information in a height direction of the moving object Mo can be obtained by estimation of respective parts of the head, shoulders, arms, hands, and feet from 3D data obtained from the 3D sensor, for example. In other words, even when the arms and hands of the moving objects Mo overlap each other, the moving object Mo can be tracked with high accuracy, and the association with the product can be performed with high accuracy.

The moving object-associated product list management unit 3607 keeps managing the product list which associates the moving object Mo with the specified products until the checkout is completed. In other words, the moving object-associated product list management unit 3607 keeps constantly managing the list of products associated with the ID of the moving object Mo by utilizing the position information management DB 132. When the object is picked up from the shelf, the moving object-associated product list management unit 3606 adds the number of acquired products. Conversely, when the product is returned to the shelf, the moving object-associated product list management unit 3607 subtracts the number of returned products.

The object entry/delivery detection unit 3608 can use the detection of the object entering the shelf as a trigger for activating the object recognition unit 3602. When the shelf camera 311 is used as the sensing device, the object entry/delivery detection unit 3608 detects the entry of the object to the shelf from a change in image data in an "entry detection region" set in the captured image of each shelf camera 311. Further, the object entry/delivery detection unit 3608 also detects that the object leaves the region by tracking the entering object in the image.

In order to track the object, the object entry/delivery detection unit 3608 throws a particle filter to the entry detection region in the shelf. In order to be able to track a plurality of moving objects Mo at the same time, for example, when the plurality of moving objects Mo stretch out their hands at the same time, after a first object enters, the particles are thrown to the "entry detection region" again, and it prepares for entering of a next object. However, on the premise that the plurality of objects do not enter the same region, the object entry/delivery detection unit 3608 does not throw the particles to the entry detection region for the region in which the object already exists.

In the predetermined region, the object entry/delivery detection unit 3608 determines that "object enters" when a proportion occupied by the particles having a certain likelihood is equal to or larger than a threshold value, and determines that "object delivers" when a proportion occupied by the particles having a certain likelihood is less than the threshold value. The object entry/delivery detection unit detects entry/delivery each time the product enters so that the number of regions of the object estimated is as small as possible at one time. The images before and after the change are stored in the storage unit 108 of the server 1 so as to be capable of being used in the estimated region. In addition to the above example, the object entry/delivery detection unit 3608 may detect the entry/delivery of the object from spectrum (wavelength) data obtained from the captured image of the object. Further, the sensing device for detecting the entry of an object into the shelf is not limited to the above-described shelf camera, and various types of sensing devices can be used. For example, in addition to an image sensor (for example, a camera), various sensors such as a weight sensor, a 3D sensor, a temperature sensor, a distance sensor, a sensor utilizing infrared rays, a pressure sensor, and an ethylene gas sensor can be employed.

The product unspecifying determination unit 3609 associates information indicating that the product is unable to be specified by the product specifying unit 3603 with the moving object Mo which picks up the object from the shelf.

The label recognition unit 3610 recognizes an attached label depending on the product specified by the product specifying unit 3603. The label recognition unit 3610 reads a multidimensional code including characters written in the label, a barcode, or the like by using a technique of image recognition or character recognition, and complements the product specifying.

The discount seal recognition unit 3611 recognizes an attached discount seal depending on the product specified by the product specifying unit 3603. The discount seal recognition unit 3611 specifies a discount amount or a discount rate of the discount seal attached to the product using the technique of image recognition or character recognition. The discount seal recognition unit 3611 is executed during the process of the product specifying unit.

In the present embodiment, a specific object visual inspection mode can be set in which a specific object is visually inspected by the visual inspection terminal Q, and an all-object visual inspection mode can be set in which all objects are visually inspected by the visual inspection terminal Q. When the specific object visual inspection mode is set, the product specifying unit 3603 transmits the related information regarding the object, which is not specified as the product, obtained by various sensing devices to the visual inspection terminal Q via the visual inspection result acquisition unit 301a. On the other hand, when the all-object visual inspection mode is set, the product specifying unit 3603 transmits the specifying result of the product and the related information of the specified product and the related information of the object that is not specified as the product to the visual inspection terminal Q via the visual inspection result acquisition unit 301a. Then, the product specifying unit 3603 specifies the product based on the visual inspection result acquired from the visual inspection terminal Q by the visual inspection result acquisition unit 301a. Specifically, when the specific result is approved or modified with respect to the product specified by the product specifying unit 3603 by the visual inspection result, the product specifying unit 3603 specifies the product according to the content indicated by the visual inspection result. Further, with respect to the object that is not specified as the product by the product specifying unit 3603, the product specifying unit 3603 specifies the object as the product indicated by the visual inspection result. When the product specifying unit 3603 requests to specify the product by the visual inspection, the request may be made after the product specifying is complemented by the label recognition unit 3610. In this case, as a result of complementation of the product specifying by the label recognition unit 3610, it is possible to specify the product by the visual inspection, excluding the fact that the product is specified.

Further, the information processing system includes a selling-restricted product determination unit 380 and a remote control unit 390. The selling-restricted product determination unit 380 determines whether the specified product is a selling-restricted product. Examples of the selling-restricted product include (A) products which are not allowed to be purchased by people under a certain age such as tobacco or alcohol, (B) expired/out-of-date products, (C) products which are prohibited to be taken depending on physical constitution since allergen ingredients are included, and (D) religious restricted products such as products other than halal foods. In other words, the selling-restricted product determination unit 380 determines that the specified product is the selling-restricted product having the age limit such as alcohol or tobacco from the DB information. Further, the selling-restricted product determination unit 380 determines that the product is the selling-restricted product having the expired date/out-of-date using the character recognition or the like. Further, the selling-restricted product determination unit 380 determines that the product is the selling-restricted product such as allergens or non-halal food for the shopper in association with the personal information obtained by personal authentication. When the selling-restricted product is detected, the selling-restricted product determination unit 380 causes the error display unit 151 to display the information. In the present embodiment, the selling-restricted product determination unit 380 may transmit the related information of the product corresponding to the selling-restricted product to the visual inspection terminal Q via the visual inspection result acquisition unit 301a. At this time, the selling-restricted product determination unit 380 appropriately transmits information (face image or personal information) regarding the shopper to the visual inspection terminal Q via the visual inspection result acquisition unit 301a according to the type of the selling-restricted product. Then, the selling-restricted product determination unit 380 can determine, based on the visual inspection result acquired from the visual inspection terminal Q by the visual inspection result acquisition unit 301a, whether selling of the selling-restricted product is permitted (whether the selling restriction is released).

When a notification indicating the error state such as the system processing abnormality, the product unspecifying, or the selling restriction is received, the remote control unit 390 solves the error state by remote control. When the ceiling camera 310, the shelf camera 311, or the checkout gate 5 are used as the sensing device, the ceiling camera 310, the shelf camera 311, or the checkout gate 5, which have detected the error state, give a notification indicating the error state to the information terminals 9a and 9b for remote control inside the shop or outside the shop or the server 1 via the network N. Then, the related information regarding the object or the product when the error state is detected is similarly notified to the information terminals 9a and 9b for remote control inside the shop or outside the shop or the server 1 via the network N. The error state can be eliminated by manipulating these devices, but of course, the error state may be released by the manned cash register inside the shop, or the clerk Mt may go to a place in which the error state occurs and release the error state.

The visual inspection result acquisition unit 301a transmits the related information regarding the object or the product obtained by the sensing device to the visual inspection terminal Q, thereby requesting to specify the product by the visual inspection and acquiring the visual inspection result transmitted from the visual inspection terminal Q in response to the request. The visual inspection result acquisition unit 301a outputs the acquired visual inspection result (specifying result of the product) to the shelf product recognition unit 360. Further, the visual inspection result acquisition unit 301a transmits the captured product image of the product corresponding to the selling-restricted product to the visual inspection terminal Q, thereby requesting to determine the selling-restricted product by the visual inspection and acquiring the visual inspection result transmitted from the visual inspection terminal Q. At this time, the visual inspection result acquisition unit 301a appropriately transmits the information (face image or personal information) regarding the moving object Mo to the visual inspection terminal Q. The visual inspection result acquisition unit 301a outputs the acquired visual inspection result (determination result of the selling-restricted product) to the selling-restricted product determination unit 380.

In the CPU 501 of the checkout gate 5, as illustrated in FIG. 7, a checkout unit 535, an input control unit 536, and an output control unit 537 function.

When the moving object region being continuously tracked enters the checkout area 45, the checkout unit 535 receives the product information (a list of products) associated with one or more moving objects Mo from the server 1 via the communication unit 509, and decides a checkout amount of money and checkout target products. The input control unit 536 inputs a signal from the input unit 506 such as the checkout button or the information reading unit installed in the gate body. The output control unit 537 causes the checkout amount of money to be displayed on the output unit 507, outputs information to the checkout machine 5a, and causes the opening/closing member to be opened or closed.

Here, when there is only one moving object Mo that has entered the checkout area 45, the checkout amount of money and the checkout target products are decided on the basis of the product information associated with the invading moving objects Mo. On the other hand, when there is a plurality of moving objects Mo that has invaded the checkout area 45, the checkout amount of money and the checkout target products are decided on the basis of the product information associated with the plurality of invading moving objects Mo. In other words, the checkout amount of money and the checkout target products of the plurality of persons are decided together. Specifically, for example, when a father makes a payment with a wallet, the father may make a payment even for the product information (a list of products) associated with a mother and a child which are accompanying persons using grouping.

The checkout gate 5-1 including the checkout machine 5a is a device that calculates and checks out the total amount of money of products. When a person who makes a payment invades the checkout area 45, using the invading as a trigger, the checkout gate 5-1 reads the product information associated with the moving object Mo, and decides the checkout amount of money, and the person can pass through the checkout gate 5-1. In a case in which the opening/closing member is provided, the opening/closing member is opened. Then, when the person who makes a payment makes a payment through the checkout machine 5a, the person can leave the shop. Alternatively, when a checkout button (not shown) is installed in the checkout gate 5-1 and the person who makes the payment presses the checkout button, the product information associated with the moving object Mo may be read out to decide the checkout amount of money and the person can pass through the checkout gate 5-1.

However, for example, when the checkout target product is an age-restricted product and is in an error state where the age is not verified, the error state is presented to the information terminal 9a, the information terminal 9b, and the error display unit 151. At this time, the checkout gate 5-1 maintains the opening/closing member in a non-passable state, and, for example, keeps the opening/closing member closed. The checkout gate 5-1 may present information indicating the error state by means of sound or light. When it becomes a state in which restriction can be released, for example, the clerk Mt verifies the age, the restriction is released by manipulating the error release unit 152 by a; manipulation of the clerk Mt, and the checkout gate 5-1 is in a passable state. The release of the restriction can also be realized by remote control.

When the object (unspecified object) in which any product is unable to be specified is associated with the moving object Mo, the error state is presented to the information terminal 9a, the information terminal 9b, or the error display unit 151. At this time, the checkout gate 5-1 keeps the opening/closing member closed and keeps the non-passable state. The checkout gate 5-1 may present the error state using a means of sound or light. Further, when the result is returned that the product is not specified, the purchaser may be notified by a screen display on the sales room device, or may be notified by voice. Examples of specific cases to be considered include (A) a case where the purchaser is requested to take the product back (retake it from the shelf and put it back in the basket) when the product is not specified, and (B) a case where a method of using the sales room device is guided to the purchaser. Furthermore, examples of specific cases include (C) a case of presenting the purchaser with product candidates that is likely to be specified as a product and requesting the purchaser to select the corresponding product, (D) a case of requesting the purchaser to specify the product using a barcode reader, and (E) a case of displaying the product list to the purchaser and requesting the purchaser to specify the product. The clerk Mt may take a countermeasure on the unspecified object in the manned checkout cash register 6 and specify the product.

In the checkout gate 5-2 using electronic money, when the person who makes the payment enters the checkout area 45 of the checkout gate 5-2, and touches various cards including a barcode or a QR code (registered trademark) to the card reading unit, the product information associated with the moving object Mo is read out, and the checkout and the payment are completed. Then, the person who makes the payment can pass through the checkout gate 5-2. When the checkout target product is the selling-restricted product or the unspecified object is associated with the moving object Mo, the operation is the same as in the checkout gate 5-1 described above is performed.

Further, in the checkout gate 5-3, it is necessary to complete the personal authentication on the moving object Mo being continuously tracked and specify the payment information. When the person who makes the payment enters the checkout area 45 of the checkout gate 5-3, the checkout gate 5-3 performs the automatic checkout as long as there is no error, and the person can pass through the checkout gate 5-3. When the checkout target product is the selling-restricted product or the unspecified object is associated with the moving object Mo, the same operation as in the checkout gate 5-1 described above is performed.

Here, when the person who makes the payment once entered the checkout area 45 retreats from the checkout area 45 before completing the checkout, the product information associated with the decided and read moving object Mo is canceled. Then, when the person who makes the payment retreats from the checkout area 45 and then enters the checkout area 45 again, the product information associated with the moving object Mo is read out again, and the checkout amount of money and the checkout target product are decided. In other words, even when the person who makes the payment once retreats from the checkout area, purchases additional products, returns the product to the shelf, and then invades the checkout area again, the product information associated with the moving object Mo is updated and decided. Here, as triggers for reading the product information, there are (1) a case where the product information is automatically read when the person who makes the payment invades the checkout area 45 and (2) a case where the product information is read when the person who makes the payment presses a checkout button installed at the checkout gate 5-1. Further, as triggers when the product information associated with the moving object Mo is discarded, there are (1) a case where the product information is automatically discarded when the person who makes the payment retreats from the checkout area 45, (2) a case where the product information is discarded when the person who makes the payment presses a cancel button (not shown) installed at the checkout gate, and (3) a case where the product information is automatically discarded as a timeout when the person who makes the payment does not pay the money until a predetermined time.

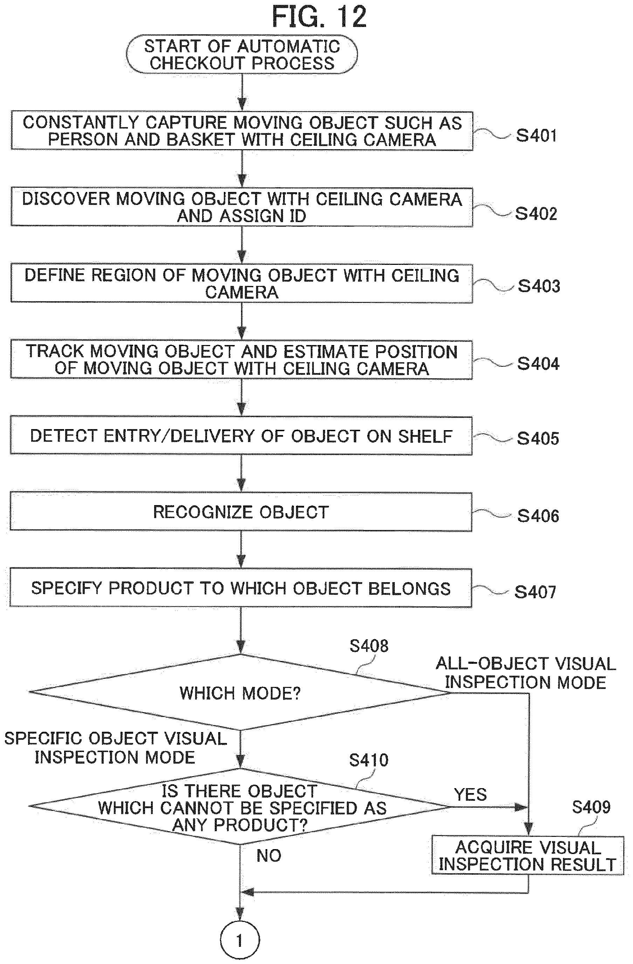

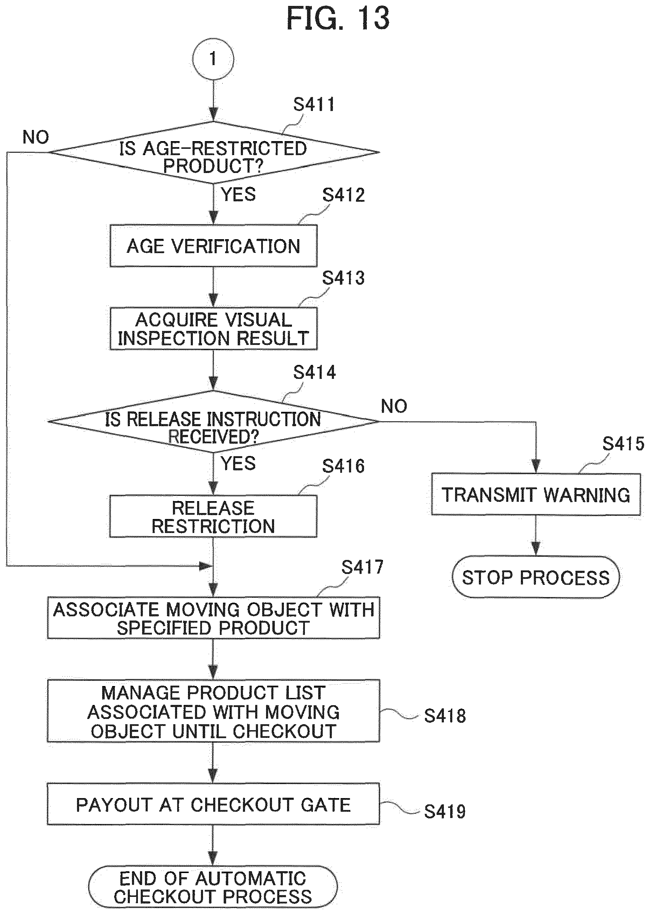

Next, a product checkout method in the information processing system of the present embodiment will be described with reference to FIG. 12. FIGS. 12 and 13 are flowcharts for describing the automatic checkout process executed by the server, the sales room device, the checkout gate, and the visual inspection terminal shown in FIG. 8 in the configuration of the information processing system according to the first embodiment of the present invention.

Here, for convenience of description, the description has been given with respect to the sensing device in which the ceiling camera is used for the discovery, region definition, and tracking of the moving object Mo, the shelf camera is used for the object entry/delivery detection, and the shelf camera and the weight sensor are used form the object recognition, but the present invention is not limited thereto. As described above, it is assumed that various types of sensing devices can be employed here. In step S401, the moving object Mo enters the shop from the entrance 41 of the shop 40 (FIG. 3), and the ceiling camera 310 installed near the entrance 41 starts capturing an image of the moving object Mo. When the moving object Mo enters the passage 44 with the basket or the cart, the inner ceiling camera 310 starts capturing an image of the moving object Mo. Thus, a plurality of ceiling cameras 310 constantly captures the entire space inside the shop 30 including the moving objects Mo, the baskets, and the carts. Before step S401, the personal authentication unit 320 may perform the personal authentication on the shopper as the moving object Mo and acquire the personal information of the moving object Mo.

In step S402, the ceiling camera-based moving object discovery unit 3302 discovers the moving object Mo and assigns an individual ID. The ID continues to be used till a predetermined timing, for example, until the shopper leaves the shop or completes the checkout. At this timing, the personal authentication unit 320 may perform the personal authentication on the shopper and acquire the personal information of the moving object Mo. Further, the grouping unit 3308 may group a plurality of the moving objects Mo into one, and the blood relationship determination unit 3309 may determine the blood relationship of a plurality of moving objects Mo and complement the grouping unit 3308.

In step S403, the ceiling camera-based moving object region definition unit 3304 defines a predetermined region including the moving object Mo discovered by the ceiling camera-based moving object discovery unit 3302. Further, when the moving object Mo moves within the range captured by the ceiling camera 310, the position of the region of the moving object Mo after the movement is defined again. The position information is managed by the position information management DB 132 or the memory in association with the ID of the moving object Mo and updated every time the region is defined. This defined position is also recognized at a position being captured by another ceiling camera 310.

In step S404, the ceiling camera-based moving object region tracking unit 3305 estimates a position to which the moving object Mo moves within the captured image being captured by the certain ceiling camera 310. Further, the moving object region definition unit 3304 defines the region of the moving object Mo for the position to which the moving object Mo is estimated to move, and updates the position information of the moving object Mo stored in the position information management DB 132 or the memory.

In step S405, the object entry/delivery detection unit 3608 detects with the shelf camera 311 that the object such as the hand of the moving object Mo enters or leaves the shelf or the weight in the shelf has changed. The object recognition unit 3602 is activated using the detection as a trigger. The object entering the shelf is detected depending on whether image data in the entry detection region set in each shelf camera 311 is changed. The object entry/delivery detection unit 3608 keeps tracking the object such as the hand of the moving object Mo that has entered the shelf and detects that the object is delivered from the shelf, by the capturing with the shelf camera 311.

In step S406, using the activation of the object entry/delivery detection unit 3608 as a trigger, when the shelf camera 311 is used, the object recognition unit 3602 compares the images before and after the image in which the object is picked up or the image in which the object is placed, and defines the image region serving as the product specifying target. In step S406, when the weight sensor 312 is used, the object recognition unit 3602 confirms the change in weight, detects that the object is picked up from the shelf when the weight decreases, and detects that the object is placed (returned) on the shelf when the weight increases. Further, in step S406, the ceiling camera-based object acquisition recognition unit may recognize that the moving object Mo acquires the object from the shelf or the like.

In step S407, the product specifying unit 3603 specifies the product to which the object belongs. When the shelf camera 311 is used, the product specifying unit 3603 lists the product candidates for the object defined by the object recognition unit 3602, through the image processing technique such as specific object recognition, general object recognition, deep learning, or the like. The listed product candidates are referred to as a "product candidate list S". Thereafter, the product specifying unit 3603 specifies the product with high accuracy by exerting the verification function. Further, in step S407, when the weight sensor 312, a "weight list for each product" in which the weight of each product is registered or a "position information list for each product" in which the position of the shelf on which the product is installed is prepared in advance. The product specifying unit 3603 specifies the product based on the "weight list for each product" and the "position information list for each product". Further, in step S407, the label recognition unit may recognize the associated label depending on the specified product. Further, in step S407, the discount seal recognition unit may recognize the attached discount seal depending on the specified product. In step S407, the ceiling camera-based product specifying unit may specify the product for the object region acquired by the ceiling camera-based object acquisition recognition unit.

In step S408, the product specifying unit 3603 determines whether either the specific object visual inspection mode or the all-object visual inspection mode is set. When the specific object visual inspection mode is set, the process proceeds to step S409. Further, when the all-object visual inspection mode is set, the process proceeds to step S410. In step S410, the visual inspection result acquisition unit 301a requests visual inspection (specifying of the product) on the visual inspection terminal Q for the target object, and acquires the visual inspection result. Subsequent to step S409, the process proceeds to step S411. In step S410, the product specifying unit 3603 determines whether the added one object cannot be specified as any product. When it is determined that the product specifying unit 3603 cannot specify any product (YES in step S410), the process proceeds to step S409.

When the product specifying unit 3603 can specify any product (NO in step S410) in step S410, the product specifying unit 3603 specifies the product including the information on the product name, price, and selling-restricted product stored in the storage unit of the server 1. Thus, the process proceeds to step S411. The specified product information may be output to the output unit 507. Further, when the product specifying unit 3603 cannot specify any product in step S410, for example, the purchaser may be requested to retake the product from the shelf by using a screen display of a display unit (not shown) provided in the sales room device 3 or voice guidance by a speaker (not shown). Further, the purchaser and the visual inspector may have a call via a microphone (not shown) provided in the sales room device 3. Further, for example, the output unit 507 of the checkout gate 5 may be displayed to the fact that any product cannot be specified, or the purchaser may be presented with product candidates with a high possibility of being applicable to be requested to select the applicable product on the screen. Alternatively, the purchaser may be requested to specify the product using the barcode reader, a list of products may be displayed to the purchaser, and the purchaser may be requested to specify the product.

In step S411, the selling-restricted product determination unit 380 determines whether the product specified by the product specifying unit 3603 is a product for which age verification is requested.

When it is determined in step S411 that the product specified by the product specifying unit 3603 is a product for which age verification is requested, that is, when it is determined to be YES, the process proceeds to step S412. When it is determined in step S411 that the product specified by the product specifying unit 3603 is not a product for which age verification is requested, that is, when it is determined to be NO, the process proceeds to step S417. In step S412, the output control unit 537 causes the output unit 507 of the checkout gate 5 to display a screen for age verification. However, when the personal information of the moving object Mo is acquired and it is not necessary to perform the age verification, step S412 is skipped and the process proceeds to step S416. Here, when there is a problem in the age authentication of the moving object Mo, the purchaser and the visual inspector may make a call via a speaker (not shown) and a microphone (not shown) provided in the checkout gate 5. In step S413, the visual inspection result acquisition unit 301a requests visual inspection (determination of the selling-restricted product) on the visual inspection terminal Q for the target product, and acquires the visual inspection result. In step S414, the selling-restricted product determination unit 380 determines whether the instruction to release the selling restriction has been received. The release of the selling restriction on the selling-restricted product is performed by any method in which the clerk responds on the spot after receiving the result of determination or employs the result of the visual inspection as a system. The case will be described below where the result of the visual inspection as the system.

When it is determined in step S414 that the instruction to release the selling restriction is not received, the process proceeds to step S415. When it is determined in step S414 that the release instruction to release the selling restriction is received, that is, when it is determined to be YES, the process proceeds to step S416. In step S415, even by the visual inspection result, the visual inspection result transmission unit 412 of the visual inspection terminal Q transmits a warning indicating that the selling restriction is not released. Upon receiving such a warning, for example, the output control unit 537 of the checkout gate 5 presents a warning indicating that the selling restriction is not released, even by the visual inspection result via the output unit 507. After step S416, the process ends and the checkout is stopped. In step S416, the selling-restricted product determination unit 380 releases the selling restriction. When step S416 is completed in this way or when it is determined in step S411 that the product is not an age-restricted product (when it is determined to be NO), the process proceeds to step S417.

In step S417, the moving object Mo and product associating unit 354 associates the moving object Mo with the specified product. In step S418, the moving object-associated product list management unit 3606 continues to manage the product list associated with the moving object Mo until the checkout. In step S419, the checkout gate 5 executes the checkout or the payment based on the product information associated with the moving object Mo. In the middle of step S419 or during step S419, the error display unit 151, the information terminal 9a, the information terminal 9b, or the output unit 507 of the checkout gate 5 may notify the clerk of some error state. In step S419, when the selling-restricted product is associated with the moving object Mo, the error state may be displayed while the gate is closed without being opened.

In the present embodiment, for example, when the ceiling camera 310 is used as the sensing device, the error assumed in the tracking of the moving object Mo may include as follows (naturally, not being limited to the following cases): (A) A case where the ceiling camera-based moving object discovery unit 3302 cannot detect the moving object when the moving object Mo enters the shop from the entrance 41 of the shop 40, (B) a case where the ceiling camera-based moving object region tracking unit 3305 loses sight of the moving object Mo being tracked, and (C) a case where the IDs associated with each of two or more different moving objects Mo are replaced during the tracking.

The system employed by the present embodiment can be take various measures including the following examples according to each error state.
(A) An image including the moving object Mo captured by the ceiling camera 310 as a subject is transmitted to the visual inspection terminal Q, and the detection of the moving object Mo by the visual inspection is requested. When the visual inspector detects the moving object Mo, a new moving object Mo is defined, an ID is assigned, and the ceiling camera-based moving object region tracking unit 3305 starts tracking. When the visual inspector does not detect the moving object Mo, the clerk is notified to that fact.
(B) When the moving object Mo that is not associated with any ID registered in the position information management DB 132 is recognized, a list of ID candidates to be associated with the captured image of the moving object Mo is transmitted to the visual inspection terminal Q. The visual inspector associates the most appropriate ID with the moving object Mo based on the association information between the moving object Mo and the ID in the past, and the ceiling camera-based moving object region tracking unit 3305 starts re-tracking. When re-tracking cannot be started for some reason, the clerk will be notified to that fact. Further, when an ID that has lost the association with the moving object Mo is detected, the ID and a list of captured images of the moving object Mo not associated with any ID are transmitted to the visual inspection terminal Q. When the visual inspector tries to associate the moving object Mo with the ID based on the association information between the moving object Mo and the ID in the past and succeeds in the association, the ceiling camera-based moving object region tracking unit 3305 starts re-tracking. When the start of re-tracking fails for some reason, the clerk will be notified to that fact.
(C) An image list of respective moving objects Mo and a list of IDs to be associated with the respective moving objects Mo are transmitted to the visual inspection terminal Q. The visual inspector attempts to allocate the ID to the moving object Mo most appropriately based on the association information between the moving object Mo and the ID in the past. When the ID can be appropriately allocated to the moving object Mo, the ceiling camera-based moving object region tracking unit 3305 starts re-tracking. When the ID cannot be appropriately allocated to the moving object Mo, the allocation is abandoned and the clerk is notified that the association has been replaced:
(D) When the ID is not allocatable to the moving object Mo, the moving object Mo is requested to read the information for specifying the product with a barcode reader. Alternatively, the moving object Mo is requested to specify the product by operating the screen by himself/herself.

### [Second Embodiment]

The above description has been made on the premise that the camera is used as the sensing device used for detecting the entry and delivery of the object and specifying the product in the first embodiment, but the sensing device capable of being employed is not limited to the camera as described above. In a second embodiment, an example will be specifically described in which a weight sensor is employed as the sensing device used for detecting the entry and delivery of an object and specifying a product.

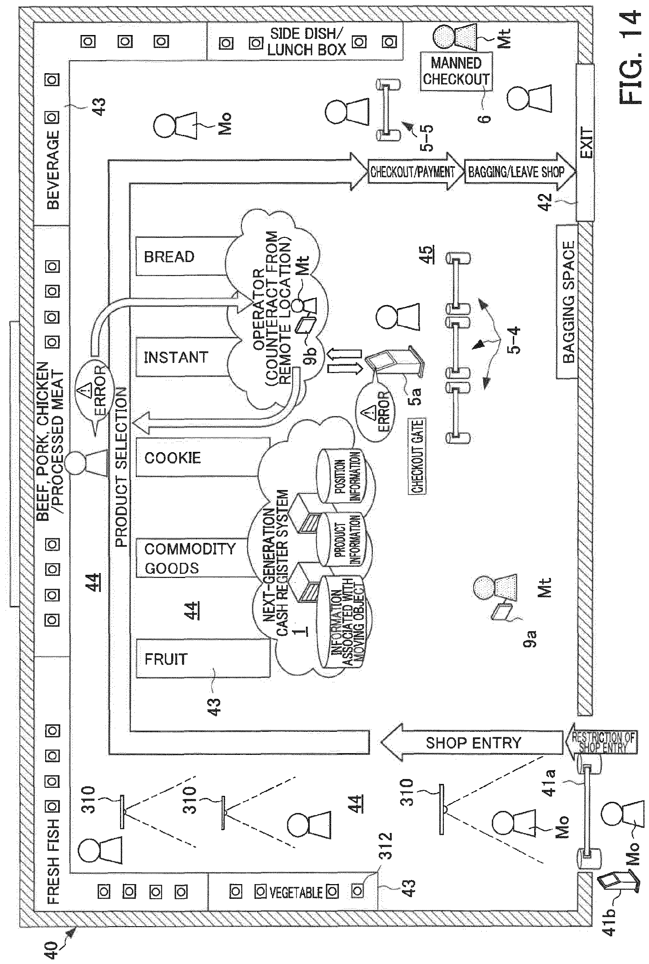

FIG. 14 is a block diagram showing a layout example of a supermarket that employs the information processing system shown in FIG. 1, and is a diagram showing an example different from that of FIG. 3.

An shop entry gate 41a and a display device 41b are installed at the entrance 41 of the shop 40. The display device 41b displays the number of persons existing in the shop 40. Then, the shop entry gate 41a has a lock function and an unlock function. When the number of persons existing in the shop 40 is equal to or less than a predetermined threshold value, a moving object Mo as a new shopper can enter the shop through the shop entry gate 41a. On the other hand, when the number of persons existing in the shop 40 is equal to or more than the predetermined number, a moving object Mo as a new shopper is prohibited from entering the shop (by the lock function) until the number of persons existing in the shop 40 becomes less than the predetermined number.

When shop entry is permitted, the moving object Mo enters the shop through the entrance 41, and goes along the passage 44. When picking up the product to be purchased, the moving object Mo goes to the checkout area 45 to completes payment and leaves the shop. The moving object Mo may put the product in the picked-up basket or own-bag, but in the present embodiment, the description will be made on the premise that the moving object Mo goes to the checkout area 45 in a state of directly carrying the product by hand.

A plurality of ceiling cameras 310 are installed on a ceiling of the passage 44 between the entrance 41 to the exit 42. In addition, a weight sensor 312 is installed at each of the shelf racks 43 on which products can be placed. The weight sensor 312 detects a weight of the shelf on which the product can be placed. Thus, the entry and delivery of the object from the shelf is detected from the change in weight detected by the weight sensor 312, and products that have entered and delivered and the number of products that have entered and delivered are specified. A plurality of weight sensors 312 may be installed on one shelf on which products can be placed. Thereby, when a change in weight is detected by the weight sensor 312 installed in front of the shelf (for example, a place where the product with the old expiration date is placed), for example, the product with the old expiration date enters and delivers, and on the other hand, when a change in weight is detected by the weight sensor 312 installed in the back of the shelf (for example, a place where the product with the old expiration date is placed), the entry and delivery of a product with a new expiration date can be specified. Further, the weight sensor 312 may be installed below the shelf rack 43. Thus, a change in weight of all the shelves is detected. Alternatively, the weight sensor 312 may be installed on each of the shelves on which the products can be placed and on each of the shelf racks 43. A change in weight of each of the shelves on which the products can be placed and each of the shelf racks 43 is detected, and thus it is possible to improve accuracy in a case of specifying the products that have entered and delivered and the number of such products.

Not only the weight sensor 312 but also the shelf camera 311 may be installed in each of the plurality of places on each shelf in the shelf rack 43. The shelf camera 311 captures the in-shelf, the product in the shelf, and other predetermined regions, thereby complementing the entry and delivery of the object from the in-shelf and the specifying of the product. Specifically, for example, when an object is removed from the shelf and then the object is returned to another shelf, the moving object Mo is in a state of being associated with an object that is not originally carried (a state of being erroneously recognized). In such a case, the entry and delivery of the object and the specifying of the product are complemented by the captured image acquired by the shelf camera 311, and thus the accuracy of checkout can be improved. On the other hand, when the entry and delivery of the object and the specifying of the product are performed based only on the captured image acquired by the shelf camera 311, it is difficult to detect the entry and delivery of the object from the back of the shelf which cannot be seen by the camera, to detect the entry and delivery of overlapping objects or disorderly placed objects, and to specify products, for example. By appropriately combining and employing information acquired from one or more sensing devices such as the weight sensor 312 and the shelf camera 311 in this way, it becomes possible to improve the specifying accuracy of the product. At this time, the shelf camera 311 does not necessarily have to be installed on the shelf, and may be installed on the ceiling, for example.

In the checkout area 45, a checkout gate 5-4 equipped with a checkout machine 5a is installed. In the present embodiment, the description will be made on the premise that the checkout machine 5a is installed closer to the entrance 41 from the checkout gate 5-4, but the checkout machine 5a may be installed at any place without limitation. In the present embodiment, the checkout machine 5a is provided with a touch panel display, a camera, a payment terminal (including a cash exchanger), a voice input device, a reader, a barcode reader, a speaker, a printer, an NW device, and a motion capture system, for example.

When the moving object Mo invades the checkout area 45 while carrying the products, the moving object Mo can complete payment in the following manner, for example, and leaves the shop through the checkout gate 5-4. For example, (1) when the moving object Mo carrying the product invades the checkout area 45, a product list of products associated with the moving object Mo is displayed on the touch panel display of the checkout machine 5a using the intrusion as a trigger. The moving object Mo confirms the product list displayed on the touch panel display, and confirms that the product list and the carried product match. When the contents of the displayed product list match the products desired to be purchased, a payment process is started. In other words, for example, the moving object Mo operates the touch panel display to select a payment method, completes payment by the selected payment method, and leaves the shop through the checkout gate 5-4. Further, for example, (2) when the moving object Mo carrying the product invades the checkout area 45 and hands a barcode, a QR code (registered trademark), or various IC cards over the reader of the checkout machine 5a, the product list associated with the moving object Mo is read out and displayed on the touch panel display. When the moving object Mo confirms that the product list displayed on the touch panel display matches the products owned by himself/herself and performs a predetermined operation, payment is automatically completed, and the moving object Mo leaves the shop through the checkout gate 5-4. Further, for example, (3) when a personally authenticated moving object Mo invades the checkout area 45, the product list of products associated with the moving object Mo is displayed on the touch panel display using the invasion as a trigger. When the moving object Mo confirms that the product list matches the products desired to be purchased, payment is automatically completed, and the moving object Mo leaves the shop through the checkout gate 5-4. In this way, only when the moving object Mo carries the product to be purchased and invades the checkout area 54, the checkout is automatically performed, and the payment can be completed by a predetermined method. Thus, the moving object Mo can complete the shopping without the intervention of a person such as the clerk Mt.

In addition, when a plurality of moving objects Mo invade the checkout area 45, a button is displayed on the touch panel display of the checkout machine 5a to select whether to perform the checkout of the plurality of moving objects Mo at once. The moving object Mo can select whether to perform the checkout at once by pressing the displayed button.

Further, when a moving object Mo, who does not carry the product, invades the checkout area 45, since the product is not associated with the moving object Mo, the product list is not displayed on the touch panel display of the checkout machine 5a. In such a case, the moving object Mo can leave the shop through the checkout gate 5-4 without making payment. Further, the checkout gate 5-4 may notify by voice or light that the moving object Mo passes through the gate without purchasing the product.

Furthermore, a checkout gate 5-5 is installed closer to the entrance 41 from the checkout cash register 6. Nonautomatic checkout products picked up by the moving object Mo are checked out by a clerk in the checkout cash register 6.

The information processing system including the server of an information processing device according to the second embodiment of the present invention has basically the same configuration as that of the information processing system including the server of the information processing system shown in FIG. 4 according to the first embodiment of the present invention. Therefore, the configuration of the information processing system including the server of the information processing system according to the second embodiment of the present invention will not be described.

In the information processing system including the server according to the second embodiment of the present invention, a hardware configuration of the server 1 and the checkout gate 5 has basically the same configuration as the hardware configuration of the server 1 and the checkout gate 5 shown in FIGS. 5 and 7.

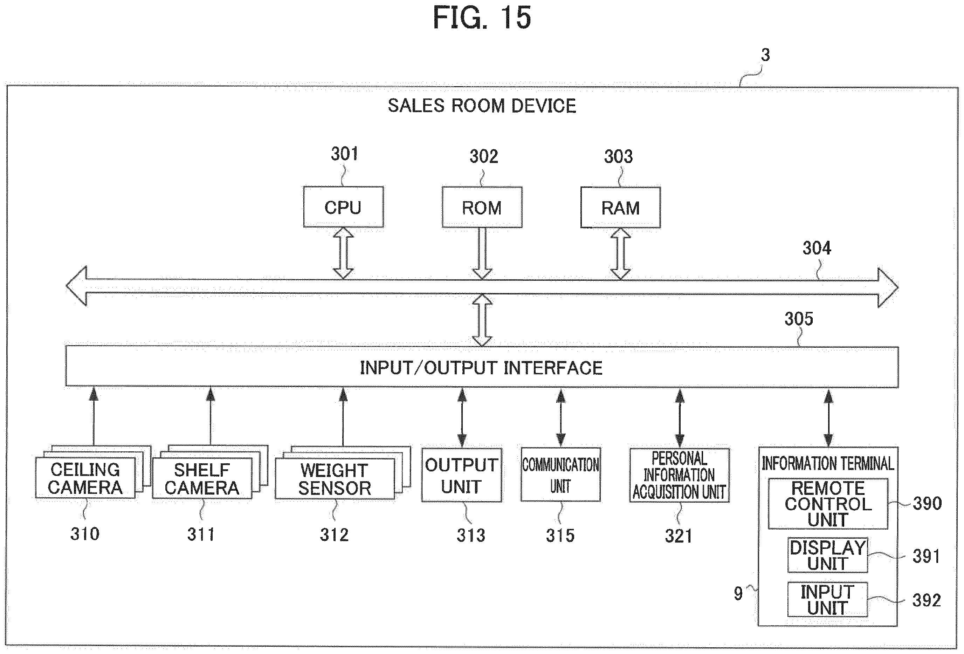

FIG. 15 is a block diagram showing a hardware configuration of the sales room device in the configuration of the information processing system according to the second embodiment of the present invention. The sales room device 3 includes a CPU 301, a ROM 302, a RAM 303, a bus 304, an input/output interface 305, a ceiling camera 310, a shelf camera 311, a weight sensor 312, an output unit 313, a communication unit 315, a personal information acquisition unit 321, and an information terminal 9. Further, the information terminal 9 includes a remote control unit 390, a display unit 391, and an input unit 392.

The ROM 302, the RAM 303, the bus 304, the input/output interface 305, the ceiling camera 310, the shelf camera 311, the weight sensor 312, and the communication unit 315 of the sales room device 3 have basically the same hardware configuration of the sales room device 3 shown in FIG. 6. The output unit 313 is configured by, for example, a display on which digital signage is displayed and a speaker, and displays the number of persons existing in the shop 40, for example. The personal information acquisition unit 321 is configured by various devices such as a reader, and acquires personal information of the moving object Mo. The information terminal 9 is configured by an information device such as a personal computer, a smartphone, or a tablet. In the information terminal 9, the remote control unit 390 and the display unit 391 have basically the same function as the blocks in the information terminal 9 shown in FIG. 6. The input unit 392 is configured by, for example, a keyboard and buttons, and input an error release and a selling restriction release.

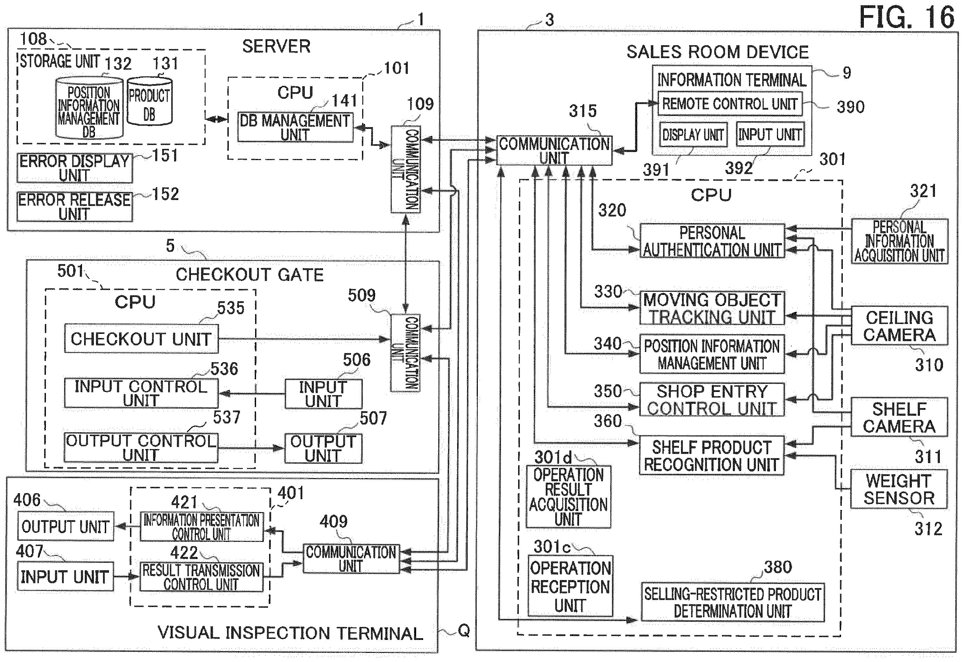

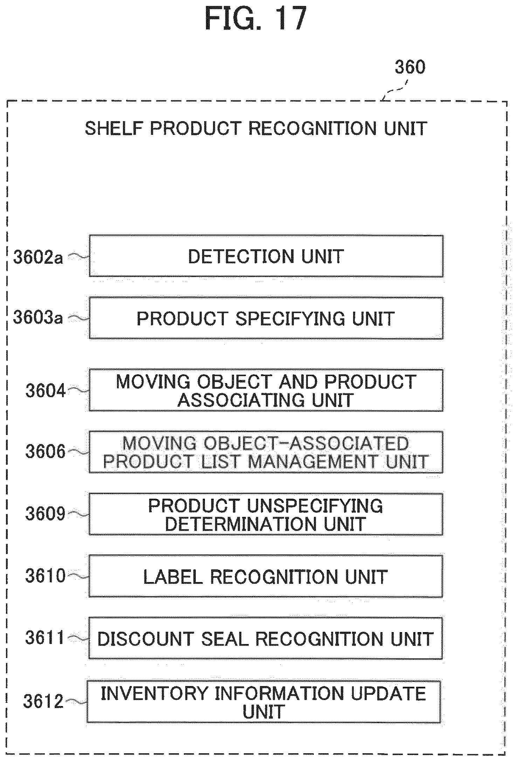

Next, a description will be given with respect to an example of the functional configuration of the server, the sales room device, the checkout gate, and the visual inspection terminal in the information processing system according to the second embodiment of the present invention with reference to FIGS. 16 and 17.

FIG. 16 is a functional block diagram showing an example of a functional configuration of the server shown in FIG. 5, the sales room device shown in FIG. 6, and the checkout gate and the visual inspection terminal shown in FIG. 7, in the configuration of the information processing system according to the second embodiment of the present invention. Further, FIG. 17 is a functional block diagram showing a detailed functional configuration of a shelf product recognition unit provided in the sales room device shown in FIG. 16, in the configuration of the information processing system according to the second embodiment of the present invention.

In FIG. 16, the server 1 includes a CPU 101, a storage unit 108, an error display unit 151, an error release unit 152, and a communication unit 109. Since each of the functional blocks constituting the server 1 has basically the same function and configuration as each of the corresponding functional blocks of the server 1 shown in FIG. 8, the description thereof will not be given.

A visual inspection terminal Q includes a CPU 401, an output unit 406, an input unit 407, and a communication unit 409. Each of the output unit 406, the input unit 407, and the communication unit 409 of the visual inspection terminal Q has basically the same function and configuration as each of the corresponding functional blocks of the visual inspection terminal Q shown in FIG. 8. Therefore, only functions and configuration different from those of the visual inspection terminal Q shown in FIG. 8 will be described below.

In the CPU 401, an information presentation control unit 421 executes control to output the information on the object, the product, and the moving object Mo transmitted from the sales room device 3 or the checkout gate 5 to the output unit 406. Specifically, for example, (1) when a request for visual inspection is made by the moving object Mo, the information presentation control unit 421 presents the information on the object and the product transmitted from the sales room device 3 or the checkout gate 5 by executing the control to output such information to a screen of a monitor to be operated by the operator. Further, for example, (2) when a selling-restricted product is associated with the moving object Mo and the moving object Mo inputs the request for the release of the selling restriction, the information presentation control unit 421 presents information such as an image and a voice regarding the moving object Mo transmitted from the sales room device 3 and the checkout gate 5 by executing control to output such information to the monitor or a speaker. Furthermore, for example, (3) when the moving object Mo inquiries about an operation method of the checkout gate 5-4 or the checkout machine 5a or about a whole payment process, the information presentation control unit 421 presents information such as an image and a voice regarding the moving object Mo transmitted from the checkout gate 5 by executing control to output such information to the screen of the monitor or the speaker.

A result transmission control unit 422 executes control to transmit the result, which is input with respect to the information on the object, the product, and the moving object Mo by the operator, to the sales room device 3 and the checkout gate 5. Specifically, for example, (1) when a request for visual inspection is made by the moving object Mo, the result transmission control unit 422 executes control to transmit the visual inspection result (specifying result of the product) by the operator to the sales room device 3 or the checkout gate 5. Further, for example, (2) a selling-restricted product is associated with the moving object Mo, the result transmission control unit 422 executes control to transmit the determination result of the selling restriction release by the operator to the sales room device 3 or the checkout gate 5. Further, for example, (3) the result transmission control unit 422 executes control to transmit support information such as an explanation on an operation method of the checkout gate 5-4 or the checkout machine 5a or a payment process via the display and the speaker of the checkout machine 5a. Alternatively, the result transmission control unit 422 may present support information by executing an operation of a remote desktop.

In the present embodiment, the description has been made on the premise that the information on the object, the product, and the moving object Mo and the information input by the operator are input and output via the visual inspection terminal Q, but the present invention is not limited to such a configuration. In other words, for example, the above-described information may be input and output to the display unit 391 and input unit 392 of the information terminal 9 in the sales room device 3.

Further, the checkout gate 5 includes a CPU 501, an input unit 506, an output unit 507, and a communication unit 509. Each of the functional blocks of the checkout gate 5 has basically the same function and configuration as each of the corresponding functional blocks of the checkout gate 5 shown in FIG. 8.

In the sales room device 3, CPU 301, a ceiling camera 310, a shelf camera 311, a weight sensor 312, a communication unit 315, a personal information acquisition unit 321, and an information terminal 9 function. In the CPU 301, a personal authentication unit 320, a moving object tracking unit 330, a position information management unit 340, a shop entry control unit 350, a shelf product recognition unit 360, a selling-restricted product determination unit 380, an operation reception unit 301c, and an operation result acquisition unit 301d function. Further, the shelf product recognition unit 360 of the CPU 301 includes, as shown in FIG. 17, a detection unit 3602a, a product specifying unit 3603a, a moving object and product associating unit 3604, a moving object-associated product list management unit 3606, a product unspecifying determination unit 3609, a label recognition unit 3610, a discount seal recognition unit 3611, and an inventory information update unit 3612. In the configuration of the sales room device 3, the ceiling camera 310, the shelf camera 311, the weight sensor 312, and the communication unit 315 have basically the same function and configuration as each of the corresponding functional blocks of the sales room device 3 shown in FIG. 8. Further, in the shelf product recognition unit 360 of the CPU 301, the moving object and product associating unit 3604, the moving object-associated product list management unit 3606, the product unspecifying determination unit 3609, the label recognition unit 3610, and the discount seal recognition unit 3611 have basically the same function and configuration as each of the corresponding functional blocks of the shelf product recognition unit 360 shown in FIG. 9. In the CPU 301, the selling-restricted product determination unit 380 has basically the same function and configuration as the corresponding functional block in the CPU 301 of the sales room device 3 shown in FIG. 8. Therefore, functions and configurations different from those of the sales room device 3 shown in FIG. 8 will be described below.

The personal information acquisition unit 321 acquires personal information using bio-information of the moving object Mo as an example. Specifically, for example, the personal information acquisition unit 321 acquires personal information of the moving object Mo by a predetermined operation for touching one screen of an application displayed on an IC card or a mobile terminal containing the personal information of the moving object Mo over a reader installed in a part of the shop entry gate 41a, for reflecting the face of the moving object Mo himself/herself, and for touching the hand or the pupil of the moving object Mo.

The personal authentication unit 320 specifies the name, gender, date of birth, halal, and banking information of the moving object Mo from the acquired personal information. Thus, for example, when an age-restricted product is associated with the moving object Mo, age verification can be requested for the moving object Mo. Further, for example, when the banking information of the moving object Mo is specified, the moving object Mo can automatically complete the payment only by going to the checkout area 45 while carrying the product to be purchased by hand. In addition, for example, since the past purchase history and an e-mail address of the moving object Mo are also specified, recommended information for the moving object Mo and information on the product carried by hand of the moving object Mo can be presented on the smartphone of the moving object Mo in real time. Further, it is also possible to realize paperless by presenting receipt after the purchase of products to the smartphone. Furthermore, since the purchase history and the personal information of the moving object Mo are managed in association with each other, these information can be efficiently utilized as marketing information.

The shop entry control unit 350 executes a process of controlling the number of persons existing in the shop 40 to be less than a predetermined threshold value. For example, when it is necessary to keep the number of persons existing in the shop 40 to less than 20, the shop entry control unit 350 permits new shoppers to enter the shop until the number of persons existing in the shop 40 is 20, and prohibits new shoppers from entering the shop when the number of persons in the shop is 20 or more. When permitting the entry of new shoppers, the shop entry control unit 350 presents to the display device 41b that the entry is permitted, and executes a process of opening (unlocking) an opening/closing member of the shop entry gate 41a. On the other hand, when prohibiting the entry of new shoppers, the shop entry control unit 350 presents to the display device 41b that the entry is prohibited, and executes a process of closing (locking) the opening/closing member of the shop entry gate 41a. At this time, the shop entry control unit 350 may execute control to notify the possibility of entering the shop by sound or light from the speaker provided in the display device 41b. Thereby, the number of persons existing in the shop 40 can be kept below a certain level, so it is possible to prevent infectious diseases due to contact between persons.

When the weight sensor 312 is employed as the sensing device, the detection unit 3602a and the product specifying unit 3603a function in the shelf product recognition unit 360.

The detection unit 3602a confirms the change in weight detected by the weight sensor 312 and the position information in the shelf on which the weight sensor 312 is installed. Specifically, for example, the detection unit 3602a recognizes that when the weight of the shelf A changes so as to be reduced, an object having the reduced weight is taken away from the shelf A, but recognizes that when the weight of the shelf B changes so as to be increased, an object having the increased weight on the shelf B has been placed (returned) in the shelf. Information on the object thus recognized being taken away from the in-shelf or placed on the shelf is handed over to the product specifying unit 3603.

The product specifying unit 3603a specifies which object any object recognized by the detection unit 3602a is, as well as the number of the recognized objects, based on weight data and position information data.

When the product is placed on the shelf or taken away from the shelf by the clerk, the inventory information update unit 3612 specifies the placed (taken away) products and the number of such products, and executes a process of storing the specified products and number in information of the product DB as product inventory information.

Upon receiving an operation request from the moving object Mo, the operation reception unit 301c transmits the information on the moving object Mo, the object, and the product to the visual inspection terminal Q. Specifically, for example, (1) when the product unspecifying determination unit 3609 determines that the product is unspecified, the operation reception unit 301c receives a request for visual inspection from the moving object Mo and then executes control to transmit the weight data and position information of the product acquired by the weight sensor 312 to the visual inspection terminal Q. At this time, the captured image obtained by the ceiling camera 310 or the shelf camera 311 may be transmitted to the visual inspection terminal Q. Further, for example, (2) when the selling-restricted product determination unit 380 determines that the specified product is a selling-restricted product, the operation reception unit 301c receives a request from the moving object Mo to release the selling restriction and then executes control to transmit the information related to the product to the visual inspection terminal Q.

The operation result acquisition unit 301d acquires the operation result from the visual inspection terminal Q. In other words, for example, operation result acquisition unit 301d acquires (1) the information regarding the product specified by the operator's visual inspection, and (2) the information such as the determination result of the release of the selling restriction by the operator.

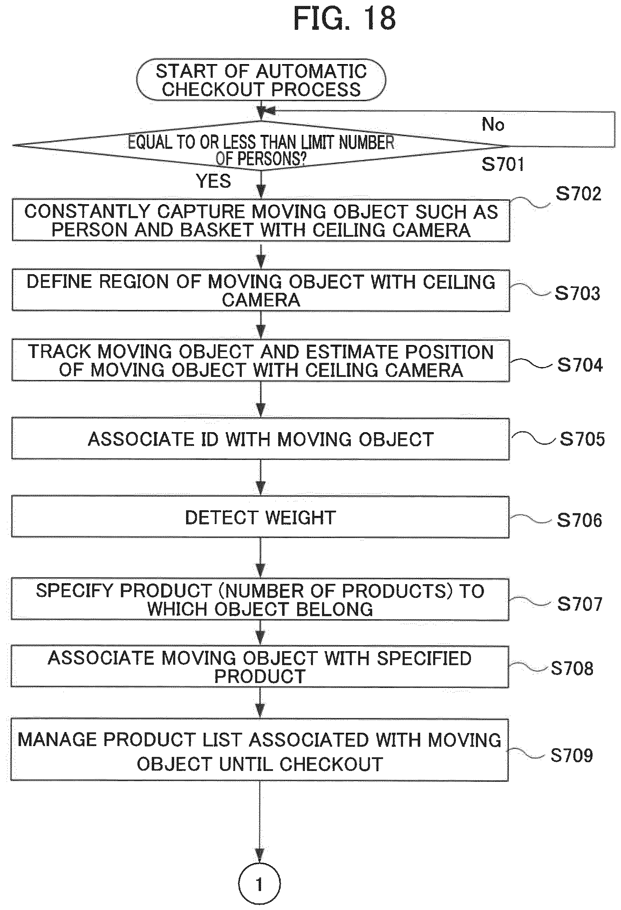

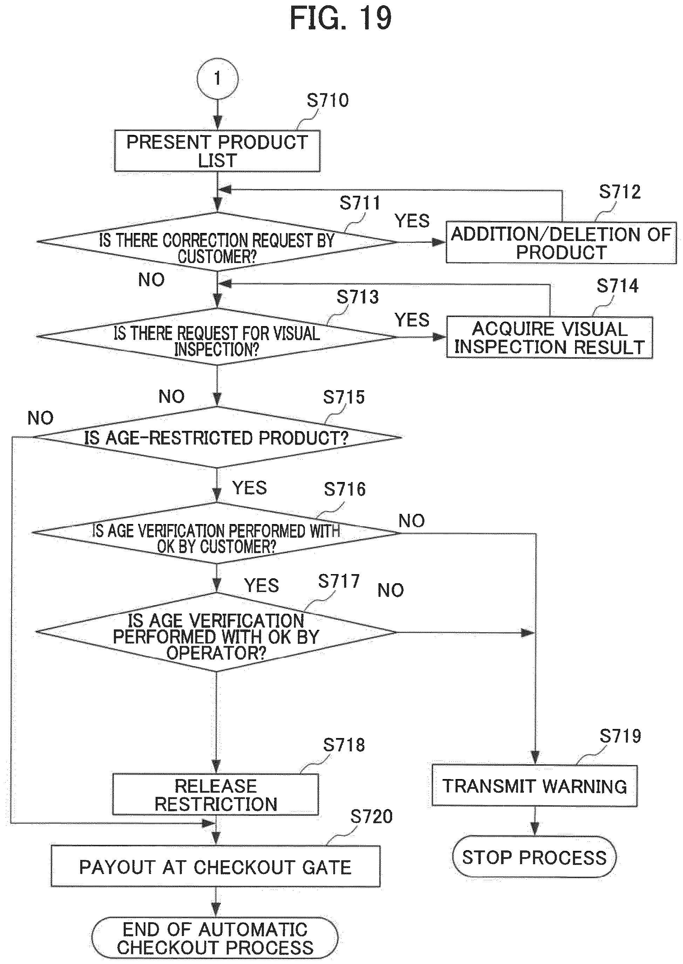

FIGS. 18 and 19 are flowcharts for describing the automatic checkout process executed by the server, the sales room device, the checkout gate, and the visual inspection terminal shown in FIG. 15 in the configuration of the information processing system according to the second embodiment of the present invention.

In step S701, the shop entry control unit 350 determines whether the number of persons existing in the shop 40 is equal to or less than the predetermined threshold value.

In step S701, when it is determined that the number of persons existing in the shop 40 is equal to or larger than the predetermined threshold value, the process repeats step S701.

On the other hand, when it is determined in step S701 that the number of moving objects Mo existing in the shop 40 is less than the predetermined threshold value, the process proceeds to step S702. In step S702, when the moving object Mo enters the shop from the entrance 41, the ceiling camera 310 starts capturing an image of the moving object Mo.

In step S703, the ceiling camera-based moving object discovery unit 3302 discovers the moving object Mo. The ceiling camera-based moving object region definition unit 3304 defines a predetermined region including the moving object Mo discovered by the moving object discovery unit 3302 as a moving object region.

In step S704, the ceiling camera-based moving object region tracking unit 3305 estimates a position where the moving object Mo moves. Further, when the moving object region definition unit 3304 moves, a region of the moving object Mo after the movement is defined again, and the position information of the moving object Mo stored on the position information management DB 132 or the memory is updated.

In step S705, the ceiling camera-based moving object discovery unit 3302 acquires an individual ID of the moving object Mo. The ID of the moving object Mo is managed by the position information management DB 132 or the memory in association with the position (coordinates) information of the moving object Mo, and is updated every time the predetermined region including the moving object Mo is defined. Such defined coordinates are also recognized at a position being imagecaptured by another ceiling camera 310. In the present embodiment, the description has been made with respect to the case where an ID is assigned after the region of the moving object Mo is defined and the ID and the moving object Mo are associated with each other, but the definition of the moving object region and the assigning and association order of the ID may be arbitrary without being particularly limited thereto.

In step S706, the detection unit 3602a recognizes based on the change in weight data acquired by the weight sensor 312 that the object has been taken away (returned) from the shelf.

In step S707, the product specifying unit 3603a specifies an object that has been taken away (returned) from the shelf. In other words, the product specifying unit 3603a specifies the object from the position information of the weight sensor 312 installed on each of the predetermined shelves on which the object is placed, and specifies the number of objects from the amount of change in weight data. In other words, the product specifying unit 3603a specifies the number of products by matching the weight data acquired by the weight sensor 312 with the weight data in the product information stored in advance, and specifies the product name from the arrangement position data in the product information. Here, the product information includes at least a product name, a price, a JAN code, a product image, a product weight, a product size, an arrangement position, a discount information, a refund, a sales total, and a display, and such product information is stored in the product DB 131 of the server 1.

In step S708, the moving object and product associating unit 3604 associates the moving object Mo with the specified product. Further, the product unspecifying determination unit 3609 associates the unspecified product with the moving object Mo.

In step S709, the moving object-associated product list management unit 3606 manages the product list associated with the moving object Mo up to the checkout.

In step S710, the output control unit 537 of the checkout gate 5 executes control to display the product list associated with the moving object Mo using the fact that the moving object Mo invades the checkout area 45 as a trigger. Specifically, for example, with reference to the product list displayed on the touch panel display of the checkout machine 5a, the moving object Mo confirms whether all the products to be purchased have been specified. When it is determined that the product list needs to be corrected, the moving object Mo can correct the product list.

In step S711, the operation reception unit 301c determines whether to receive a correction request by the operation of the moving object Mo himself/herself.

When it is determined in step S711 that the correction request of the product list by the moving object Mo himself/herself has been received, the process proceeds to step S712. In step S712, the moving object Mo corrects the product list by its own operation. Specifically, for example, when there is an excess of deficiency between the product purchased by the moving object Mo and the product displayed in the product list, the moving object Mo may correct the number of products by pressing a button (not shown) on the touch panel display of the checkout machine 5a. Further, for example, when the product list displays a product that cannot be specified or an erroneous product, the moving object Mo may try to correct the product list by reading a barcode attached to the product. Furthermore, the moving object Mo may try to specify the product by selecting the correct product from the product candidates displayed on the touch panel display, or may specify the product by searching from the product information of all the products stored in the product DB 131. When the correction of the product list is completed in this way, the moving object-associated product list management unit 3606 updates the product list, the process returns to step S711, and the subsequent processes are repeated.

On the other hand, when it is determined in step S711 that the correction of the product list is not requested by the moving object Mo himself/herself, the process proceeds to step S713.

In step S713, the operation reception unit 301c determines whether the request for visual inspection has been received from the moving object Mo.

When it is determined in step S713 that the request for visual inspection has been received, the process proceeds to step S714. In step S714, the operation result acquisition unit 301d of the sales room device 3 acquires the result of the visual inspection by the operator. Specifically, for example, when it is determined in step S713 that the request for visual inspection has been received from the moving object Mo, the operator (not shown) performs the visual inspection. The visual inspection method is not particularly limited, and the operator may perform the visual inspection based on the information (for example, weight data or image information acquired by the camera) on the object and the product, or may confirm the image of the object through the camera provided in the checkout machine 5a. Then, the result transmission control unit 422 of the visual inspection terminal Q executes control to transmit the visual inspection result to the sales room device 3 and the checkout gate 5. When the operation result acquisition unit 301d acquires the result of the operator's visual inspection, the moving object-associated product list management unit 3606 updates the product list, the process returns to step S713, and the subsequent processes are repeated.

On the other hand, when it is determined in step S713 that the request for visual inspection is not received, the process proceeds to step S715.

In step 715, the selling-restricted product determination unit 380 determines whether the product specified by the product specifying unit 3603 is a product for which a selling restriction is required. For example, when the selling-restricted product determination unit 380 determines that the specified product is an age-restricted product, the process proceeds to step S716.

In step 716, the operation reception unit 301c determines whether the request for the release of the selling restriction has been received by the moving object Mo himself/herself. In other words, for example, when the moving object Mo presses against an OK button with respect to the display such as "Are you 20 years old or older" displayed on the touch panel display of the checkout machine 5a, the operation reception unit 301c receives the request for the release of the selling restriction from the moving object Mo himself/herself. Upon receiving the request for the release of the selling restriction from the moving object Mo, the operation reception unit 301c executes control to transmit the information on the moving object Mo and the product to the visual inspection terminal Q.

In step 717, the operation result acquisition unit 301d acquires the result of age verification by the operator. Specifically, for example, the operator confirms the face and voice of the moving object Mo and the product information, and determines whether the moving object Mo is 20 years old or older. At this time, the operator may notify the moving object Mo to present a driver's license capable of performing age verification to the camera, via the touch panel display or the speaker.

When the operation result acquisition unit 301d confirms that the age verification is made by the moving object Mo himself/herself or the operator, the process proceeds to step S718. In step 718, the moving object-associated product list management unit 3606 updates the product list, and selling-restricted product determination unit 380 releases the selling restriction.

On the other hand, when the age verification is not made by the moving object Mo himself/herself or the operator in steps S716 and S717, the process proceeds to step S719. In step S719, the selling-restricted product determination unit 380 transmits a warning and stops the automatic checkout process.

In step S720, the moving object Mo completes the payment. When the payment is completed, the gate opens, and the moving object Mo leaves the shop. Further, when the moving object Mo is personally authenticated, the above-described age verification does not necessarily have to be executed, and the moving object Mo can leave the shop immediately after the completion of the payment. When the moving object Mo leaves the shop, the ceiling camera-based moving object region tracking unit 3305 updates the position information of the person in the shop 40, and the shop entry control unit 350 permits new shoppers to enter the shop.

### [Other Embodiments]

The present invention is not limited to the above-described embodiments, and modifications and improvements are made within the scope in which the object of the present invention can be achieved.

Further, for example, the information processing system may include a shelf inventory management function. The shelf inventory management function includes a clerk identification means and an inventory information update means. The clerk identification means identifies the clerk from the shopper. For example, the clerk identification unit assigns a physical marker, which can identify the clerk, to a hat or clothes worn by the clerk. The ceiling camera and the shelf camera captures the image of the physical marker, and thus the clerk is identified.

Further, the clerk identification means may include a button provided in a predetermined area such as the backroom of the shop. The clerk identification means assigns an ID to the clerk when the button is pushed toward the clerk existing in a predetermined area. Furthermore, as the clerk identification means, an ID may be assigned to the clerk when the clerk passes through a predetermined area such as the backroom of the shop or invades the predetermined area. The clerk identification unit uses the ceiling camera to keep tracking the region of the person recognized as the clerk.

Then, the inventory information update means updates the inventory information of the shelf in the product DB of the server using the object recognition unit and the product specifying unit when the clerk supplements (adds) the product to the shelf or when the clerk takes out or discards (subtracts) the product from the shelf. When the product is purchased, the inventory information update means updates the inventory of the shelf on which the products exist and the inventory information of the entire shop. The inventory information update means manages the inventory of the shelf and the inventory information of the entire shop, and give a notification to the remote control unit or automatically places an order when the number of the products falls below a threshold value.

Further, the present invention may include a shopper attribute estimation function. The shopper attribute estimation function estimates attributes such as a rough age or generation, a gender, or the like of the shopper from face recognition, for example. The shopper attribute estimation function is provided in the sales room device and the checkout gate in the present embodiment. Further, in the present invention, the purchase information and the attribute information or the personal information of the shopper are shared with the POS system. An example of the purchase information includes the information such as a product name of a purchased product, an amount of money, and the like, the position of the product, or the movement history of the shopper, or data on the product that has not been purchased but has been moved in and out of the shelf. An example of the attribute information of the shopper includes the information obtained by the above-described shopper attribute estimation function.

The shopper attribute estimation function may be shared with the selling-restricted product determination unit, for example. The shopper attribute estimation function may be controlled such that the selling-restricted product determination unit does not perform the age verification when the shopper apparently is over 30 years old who do not require the age verification as a result of the attribute estimation.

The problems related to the above-described embodiments will be supplemented below. As a method of specifying the product in the information processing system, the image recognition using deep learning has been given as an example in the above-described embodiments. However, in the deep learning, re-learning is required when the product cannot be specified or erroneously recognized, and at this time, it is necessary to manually give the image of the correct product, which takes a lot of time and effort.

As a solution to the above problems, the information processing system of the present invention can realize the automation of the above-described series of deep learning re-learning processes by implementing: a function of performing confirmation by visual inspection of the visual inspector or barcode scanning at the time of purchasing the product to correct the specifying of the product; a function of recording the correct product image and the necessary information (corrected product number or specified code) in association with each other when the specifying of the product is corrected; a function of automatically executing the learning of deep learning based on the correct product image and the necessary information; and a function of automatically deploying the learning result to the information processing system. Here, the deployment of the learning result refers to a process of updating, for example, a deep learning model of the information processing system based on the learning result, so that the learning result can be used to specify the product. The above-described re-learning process may be started by a predetermined condition such as a failure to specify the product as a trigger, or may be started by an explicit operation by a person in charge, for example, by using pressing the button as a trigger.

According to the deep learning re-learning process as described above, it is possible to simplify the complicated work required for deep learning re-learning, reduce manpower, and provide an information processing system in which the accuracy of product specifying is continuously improved.

In the above-described embodiments, examples of the image recognition method applied when the object is specified as a product may include object recognition using AI (Artificial Intelligence), object recognition using feature points and feature quantities, recognition of product logo shape, and character recognition (character shape recognition using AI, character recognition using OCR (Optical Character Recognition)).

In addition to the image recognition method, using not only the above-described weight recognition (weight recognition of an object using a weight sensor) but also one or combination of a plurality of recognition methods including product recognition (scanning of a barcode or QR code (registered trademark) by an infrared sensor or image reading) by scanning of identification information such as a barcode or a QR code (registered trademark), and product recognition by reading of electronically recorded identification information such as a RFID, the object can be specified as a product. In this case, it is possible to score the specifying result of the object by each specifying method and estimate that the object is the product with the highest score. Further, the above-described specifying methods including the weight recognition, the product recognition by scanning of identification information such as a barcode or a QR code (registered trademark), and the product recognition by reading of electronically recorded identification information is not combined with the image recognition method, and can recognize an object as a product by one or combination thereof.

In each of the embodiments described above, the visual inspection of the object or the product is performed by the visual inspection terminal Q, but the present invention is not limited thereto. In other words, the visual inspector may perform the visual inspection with another device such as the checkout gate 5. In each of the embodiments described above, one shop or one checkout gate 5 is provided with one visual inspection terminal Q, but each of a plurality of shops or each of a plurality of checkout gates are provided with one visual inspection terminal Q.

Further, the hybrid check system (visual inspection) in the above-described embodiments is not necessarily used only for specifying the product. In other words, for example, the hybrid check system can be used to determine whether the products are (A) products which are not allowed to be purchased by people under a certain age such as tobacco or alcohol, (B) expired/out-of-date products, (C) products which are prohibited to be taken depending on physical constitution since allergen ingredients are included, and (D) religious restricted products such as products other than halal foods.

In the above-described embodiments, the flapper type gate is employed in the shop entry gate 41a, the checkout gate 5-4, and the checkout gate 5-5, but the present invention is not particularly limited to such method. In other words, for example, a gate displayed by a hologram may be employed. Each of the shop entry gate 41a, the checkout gate 5-4, and the checkout gate 5-5 may notify the passage-possibility of the person by voice or light.

The product information is stored in the product DB 131 and updated in real time. Further, the product information can be managed for each shop, for each a plurality of shops, for each cash register, or for each day, month, and year.

In the above-described embodiments, the storage unit in each information processing device has been described as being configured by the hard disk and DRAM, but the present invention is not limited thereto. For example, an external storage device such as SSD may be used.

In the above-described embodiments, when the product list displays a product that cannot be specified or an erroneous product, the moving object Mo'may try to correct the product list by reading a barcode, but the moving object Mo may specify all carrying-products by reading barcodes.

In the above-described embodiments, the state space model based on the captured image is employed for discovery of the moving object Mo, but the present invention is not limited to such a method. In other words, for example, various data of three-dimensional point cloud data, a 2D image, distance data, temperature data, the amount of infrared rays, and optical data acquired from each of the sensing devices may be employed for discovery of the moving object Mo.

In the above-described embodiments, the region of the moving object Mo is defined by continuously discovering the region of change centered on the discovered moving object Mo, but the present invention is not particularly limited to such a method. In other words, for example, the moving object Mo is discovered from the three-dimensional point cloud data, position coordinates of the moving object Mo is specified using an ICP algorithm, and the moving object region may be defined. Further, when the moving object Mo is a person, the region of the moving object Mo may be defined using data of three-dimensional point cloud data, a 2D image, distance data, temperature data, the amount of infrared rays, and optical data capable of being acquired from each sensing. In addition, the region of the moving object Mo may be estimated using deep learning simultaneously.

In the above-described embodiments, the tracking of the moving object Mo has been described on the premise that a technique for tracking by collection of feature data or a technique of object tracking such as Bayesian filter is employed, but the present invention is not particularly limited to such a method. In other words, for example, the moving object Mo may be tracked using the optimum solution of position information. Further, the moving object Mo may be estimated and tracked after determination of noise, based on time-series position information.

In the above-described embodiments, the position information of the cameras is defined as to the positions captured by each camera in the shop by synthesis of the captured images captured by the ceiling cameras 310, but the present invention is not limited to such a method. In other words, for example, by coordinate conversion using the ICP algorithm, the position information of each camera may be coordinate-converted into a position information of the entire shop (combining a plurality of cameras) to define the position information of the camera.

In the above-described embodiments, the description has been made on the premise that the moving objects Mo are grouped using the position information of the plurality of moving objects Mo or information of the moving direction, the information used for grouping is not limited thereto. In other words, for example, the grouping may be performed based on the bio-information acquired by the personal information acquisition unit 321.

In the above-described embodiments, the description has been made that the blood relationship of the plurality of moving objects Mo is determined by the face authentication technique, but the information used for determining the blood relationship is not limited thereto. In other words, for example, the blood relationship may be determined based on various information acquired by the personal information acquisition unit 321.

In the above-described embodiments, when an object is delivered from the moving object Mo to another moving object Mo, the inside of the basket or the cart before and after the object is delivered is recognized by difference recognition, and thus the product may be specified.

In the above-described embodiments, in order to photograph a wide range with one camera, the mirror that reflects the target to be photographed is installed on the ceiling and the method is used for capturing the photographed target reflected in the mirror by the ceiling camera 310 or the shelf camera 311, but the position of the camera is not limited to walls. For example, the camera may be installed on the shelf or the ceiling.

In the above-described embodiments, the position information of the moving object Mo is displayed on the information terminal 9 carried by the clerk Mt or the screen of the backroom, but the terminal for displaying is not limited thereto. The position information of the moving object Mo may be displayed on the terminal carried by a service provider or a person in charge of system (not shown) by connection to the Internet.

In the above-described embodiments, when the shelf camera 311 is used as the sensing device, the description has been made on the premise that the product is specified by listing the product candidates through the image processing technique such as specific object recognition, general object recognition, deep learning, or the like, and by verifying the listed product candidates by matching with another list, but the verification herein is not necessarily an indispensable element. In other words, the product candidates listed by the image processing technique such as the specific object recognition may be treated as the specified product.

In the above-described embodiments, the description has been made on the premise that the entry/delivery of the object is recognized at the timing when the object is taken away from the shelf and the specifying the product is attempted, but the recognition and the specifying timing are not limited thereto and may be arbitrary. In other words, for example, when the object is taken away from the shelf, the product may be specified using the fact that the entry/delivery of the object is recognized, the recognized object and the moving object Mo are associated with each other, and the moving object Mo invades the checkout area 45, as a trigger. Thus, since there is a time extension until the product is specified after the entry/delivery of the object is recognized, for example, it is possible to specify the product by multiple methods, for example, to improve the accuracy of specifying the product.

In the above-described embodiments, when the product cannot be specified by the image recognition, the learning process of deep learning can be automated by visual inspection confirmation by the visual inspector or the operator or recording the necessary information input by reading of the barcode and the correct product image in association with each other, but as a label that can be used as a correct answer is not limited to the product image. In other words, for example, information for specifying the product other than an image (for example, a recognition result by the weight sensor) may be associated with the necessary information as a correct answer, and the learning process may be executed. Thus, it is possible to improve the accuracy of a re-learning process of the deep learning.

Further, in the present invention, instead of image processing by the CPU, processing by a graphic processing unit (GPU) may be performed. Further, the hardware configurations and the block diagrams shown in the drawings are merely examples for achieving the purpose of the present invention, and the present invention is not limited to the illustrated examples. Further, the functional configurations of FIGS. 8 to 11, 16, and 17 are merely examples and are not particularly limited. In other words, it suffices when the system is equipped with a function capable of executing the above-described series of processes as a whole, and what kind of functional block is used to realize this function is particularly limited to the examples shown in FIGS. 8 to 11, 16, and 17 and may be arbitrary. In addition, the locations of the functional block are not limited to those shown in the drawings, and may be arbitrary. For example, one functional block may be constituted by a single piece of hardware, a single piece of software, or a combination thereof. In a case in which the process of each functional block is executed by software, a program constituting the software is installed in a computer or the like from a network or a recording medium.

The computer may be a computer incorporated in dedicated hardware or may be a smartphone or a personal computer.

Further, the computer may be, for example, a server on the cloud.

Here, the recording medium including such a program is not only configured by removable medium (not shown) distributed separately from the main body of the device in order to provide the program to the user, but also is preliminarily incorporated in the main body of the device of the user.

In this description, steps describe a program recorded in a recording medium include not only processes which are chronologically performed in the order but also processes which are performed in parallel or individually although not necessarily performed chronologically. Further, in this description, a term "system" indicates the entire apparatus constituted by a plurality of devices, a plurality of means, or the like.

In summary, the information processing system to which the present invention is applied suffices to have the following configuration, and various embodiments can be taken. In other words, the information processing system is an information processing system used when a person moves and purchases a product, the information processing system including: a moving object tracking means (for example, the ceiling camera-based moving object region tracking unit 3305) for tracking a moving object including the person or an object that moves together with the person; a product specifying means (for example, the product specifying unit 3603) for specifying both a product and the number of products by a predetermined method using at least one of a weight sensor and a camera; and an associating means (for example, the moving object and product associating unit 3604) for associating the specified product with the moving object having a predetermined position relation. Thus, it is possible to provide the information processing system capable of achieving automation of checkout for products, reduction of a time taken for checkout for products, and fraud prevention by shoppers or cashiers when the purchasers purchase products displayed in shops.

Further, the information processing system further includes: an offering means (for example, the output control unit 537) for offering a checkout amount of money decided from information of the specified product. Thus, the purchaser can attempt to perform the checkout for the product without a person based on the offered checkout amount of money.

Further, the information processing system further includes: a checkout means (for example, the checkout unit 535) for processing a checkout for the product associated with the moving object, as a checkout for the moving object. Thus, the purchaser can perform the checkout for the product purchased by himself/herself simply by invading the checkout area.

Further, the information processing system further includes: an acquisition means (for example, the personal information acquisition unit 321) for acquiring information on the moving object. Thus, the purchaser can complete the checkout for the product simply by passing through the checkout gate without taking out cash or a credit card.

The moving object tracking means recognizes (for example, the ceiling camera-based transferred object recognition unit 3312) that the product associated with the moving object as a tracking target is delivered to a person different from the moving object, specifies the person different from the moving object as a new moving object, and sets the new moving object as a tracking target, and the associating means (for example, the moving object and product associating unit 3604) associates the delivered product with the new moving object. Thus, even when the objects are transferred between the moving objects Mo, the product list of each of the moving objects Mo is updated, so that the accuracy of automatic checkout can be further improved.

Further, the information processing system further includes: a first error presenting means (for example, the error display unit 151) for presenting a predetermined error state when the product is a selling-restricted product and the person is potentially subject to selling restriction. Thus, the clerk Mt and the operator can verify the age of the person who wants to purchase the selling-restricted product and notify that the product is an allergen product.

The associating means further associates (for example, the product unspecifying determination unit 3609), the product, which has failed in an attempt to specify both the product and the number of products by the product specifying means, with the moving object, and the information processing system further includes a second error presenting means (for example, the error display unit 151) for presenting a predetermined error state when the product has failed in the attempt to specify both the product and the number of products by the product specifying means. Thus, the clerk Mt and the operator can propose to the purchaser the correction by himself/herself or the correction by the operator's visual inspection for the product that failed in the specifying attempt.

Further, the moving object tracking means tracks, as the moving object, the person who moves in a shop where a clerk exists, and the information processing system further includes a clerk identification means (for example, the clerk identification means) for identifying between the clerk and the moving object. Thus, since the clerk and the moving object Mo being the purchaser can be tracked separately, the entry/delivery of the object related to the inventory management work of the clerk and the entry/delivery of the object by the moving object Mo can be recognized separately. For this reason, the accuracy of product management can be improved.

The information processing system includes an inventory information update means (for example, the inventory information update unit 3612) that, when one or more of the product are arranged in a predetermined storage space including shelves of a shop to manage an inventory of the product in each of the storage space and the entire shop and a predetermined product is purchased, updates the inventory of the predetermined product existing in each of the storage space and the entire shop. Thus, it is possible to automatically perform a management task such as in-shop inventory work.

Further, the information processing system further includes: a supplement notification means (for example, the inventory information update unit 3612) that notifying a fact that inventory number of the products in the storage space satisfies a predetermined requirement; and an inventory supplement means (for example, the inventory information update unit 3612) for controlling execution of automatic order when the inventory number of the products in the entire shop satisfies a predetermined requirement. Thus, the inventory of the products is automatically ordered, so that management work can be performed reliably in a short time and at low cost.

The information processing system further includes: an attribute estimation means (for example, the attribute estimation function) for estimating attributes of the person. Thus, for example, information on the purchase history of the purchaser for each predetermined attribute can be utilized for marketing and the like.

The moving object tracking means further registers history information indicating a route of movement of the moving object during tracking (for example, the moving object region definition unit 3304, the position information management DB 132). Thus, the behavior pattern of the moving object Mo can be grasped, so that the registered history information can be utilized for marketing and the like.

Further, the product specifying means includes: a first specifying means (for example, the operation result acquisition unit 301d) for acquiring a result of an attempt to specify both the product and the number of products using a predetermined method in which a visual inspector visually confirms an image of the product included in a subject, as a first method; and a second specifying means (for example, the product specifying unit 3603a) for attempting to specify both the product and the number of products using a second method different from the first method in the predetermined methods, and the product specifying means specifies the product based on a result obtained from at least one of the first specifying means and the second specifying means. Thus, the accuracy of specifying the product can be improved.

The person moves to purchase the product in the shop, and the information processing system further includes a shop entry control means (the shop entry control unit 350) for controlling permission or prohibition of a new person depending on the number of persons in the shop. Thus, the density of persons in the shop can be controlled to be equal to or less than a predetermined level, so that it is possible to prevent infectious disease caused by droplets and aerosols.

The information processing system further includes: a shop entry control notification means (for example, the output unit 313) for notifying that the new person is prohibited from entering the shop by control of the shop entry control means. Thus, the moving object Mo can stand by while is prohibited from entering the shop, so that the density of persons in the shop can be maintained equal to or less than a predetermined level.

Further, the offering means is further configured to offer a checkout amount of money decided from information of the product associated with each of the one or more moving objects, which satisfy a predetermined condition, among the moving objects (for example, the output control unit 537). Thus, it is possible to collectively check out for the product information associated with the plurality of moving objects Mo.

### EXPLANATION OF REFERENCE NUMERALS

- 1: server
- 3: sales room device
- 5a: checkout machine
- 5-1, 5-2, 5-3: checkout gate
- 40: shop
- 41, 42: gateway
- 43: shelf rack
- 44: passage
- 101, 301, 401, 501: CPU
- 108: storage unit
- 109, 315, 509: communication unit
- 131: product DB
- 141: DB management unit
- 151: error display unit
- 310: ceiling camera
- 311: shelf camera
- 312: weight sensor
- 320: personal authentication unit
- 330: moving object tracking unit
- 3302: ceiling camera-based moving object discovery unit
- 3304: ceiling camera-based moving object region tracking unit
- 3305: ceiling camera-based moving object region definition unit
- 3308: grouping unit
- 3309: blood relationship determination unit
- 340: position information management unit
- 341: inter-camera information transfer unit
- 342: individual camera position definition unit
- 360: shelf product recognition unit
- 3602: object recognition unit
- 3603: product specifying unit
- 3609: product unspecifying determination unit
- 3610: label recognition unit
- 380: selling-restricted product determination unit
- 390: remote control unit
- Mo: moving object

## Claims

1. An information processing system used when a person moves and purchases a product, comprising:
a moving object tracking unit that tracks a moving object including the person or an object that moves together with the person;
a product specifying unit that specifies both a product and the number of products by a predetermined method using at least one of a weight sensor and a camera; and
an associating unit that associates the specified product with the moving object having a predetermined position relation.

2. The information processing system according to claim 1, further comprising an offering unit that offers a checkout amount of money decided from information of the specified product.

3. The information processing system according to claim 1 or 2, further comprising a checkout unit that processes a checkout for the product associated with the moving object, as a checkout for the moving object.

4. The information processing system according to any one of claims 1 to 3, further comprising an acquisition unit that acquires information on the moving object.

5. The information processing system according to any one of claims 1 to 4, wherein the moving object tracking unit recognizes that the product associated with the moving object as a tracking target is delivered to a person different from the moving object, specifies the person different from the moving object as a new moving object, and sets the new moving object as a tracking target, and the associating unit associates the delivered product with the new moving object.

6. The information processing system according to any one of claims 1 to 5, further comprising a first error presenting unit that presents a predetermined error state when the product is a selling-restricted product and the person is potentially subject to selling restriction.

7. The information processing system according to any one of claims 1 to 6, wherein the associating unit further associates the product, which has failed in an attempt to specify both the product and the number of products by the product specifying unit, with the moving object, and
the information processing system further comprises a second error presenting unit that presents a predetermined error state when the product has failed in the attempt to specify both the product and the number of products by the product specifying unit.

8. The information processing system according to any one of claims 1 to 7, wherein the moving object tracking unit tracks, as the moving object, the person who moves in a shop where a clerk exists, and
the information processing system further comprises a clerk identification unit that identifies between the clerk and the moving object.

9. The information processing system according to any one of claims 1 to 8, comprising an inventory information update unit that, when one or more of the product are arranged in a predetermined storage space including shelves of a shop to manage an inventory of the product in each of the storage space and the entire shop and a predetermined product is purchased, updates the inventory of the predetermined product existing in each of the storage space and the entire shop.

10. The information processing system according to claim 9, further comprising: a supplement notification unit that notifies a fact that inventory number of the products in the storage space satisfies a predetermined requirement; and
an inventory supplement unit that controls execution of automatic order when the inventory number of the products in the entire shop satisfies a predetermined requirement.

11. The information processing system according to any one of claims 1 to 10, further comprising an attribute estimation unit that estimates attributes of the person.

12. The information processing system according to any one of claims 1 to 11, wherein the moving object tracking unit further registers history information indicating a route of movement of the moving object during tracking.

13. The information processing system according to any one of claims 1 to 12, wherein the product specifying unit includes: a first specifying unit that acquires a result of an attempt to specify both the product and the number of products using a predetermined method in which a visual inspector visually confirms an image of the product included in a subject, as a first method; and
a second specifying unit that attempts to specify both the product and the number of products using a second method different from the first method in the predetermined methods, and
the product specifying unit specifies the product based on a result obtained from at least one of the first specifying unit and the second specifying unit.

14. The information processing system according to any one of claims 1 to 13, wherein the person moves to purchase the product in the shop, and
the information processing system further includes a shop entry control unit that controls permission or prohibition of a new person depending on the number of persons in the shop.

15. The information processing system according to claim 14, further comprising a shop entry control notification unit that notifies that the new person is prohibited from entering the shop by control of the shop entry control unit.

16. The information processing system according to any one of claims 2 to 15, wherein the offering unit is further configured to
offer a checkout amount of money decided from information of the product associated with each of the one or more moving objects, which satisfy a predetermined condition, among the moving objects.
